# EUROPEAN PATENT APPLICATION

(11) **EP 4 246 670 A1**
(43) Date of publication of application: **20.09.2023**
(21) Application number: 21891864.7
(22) Date of filing: 09.11.2021
(51) Int. Cl.: H01M 12/06, H01M 12/08, H01M 4/38, H01M 4/40, H01M 4/42, H01M 4/46, H01M 4/86, H01M 4/88, H01M 4/90, H01M 4/96, H01M 8/0202, H01M 8/083, B01J 23/644, C25B 11/073, C25B 9/00

(54) **ELECTRODE, METHOD FOR PREPARING SAID ELECTRODE, AND ELECTROCHEMICAL DEVICE USING SAID ELECTRODE**

(30) Priority: 12.11.2020 JP 2020188929; 27.01.2021 JP 2021011494
(71) Applicant: The Doshisha, Kyoto-shi, Kyoto 602-8580 (JP)
(72) Inventor: MORIMITSU, Masatsugu, Kyotanabe-shi, Kyoto 610-0394 (JP)
(74) Representative: Scott, Stephen John
(86) International application number: PCT/JP2021/041203
(87) International publication number: WO 2022/102618

(57) **Abstract**

An electrode used for oxygen reactions, the electrode being excellent in catalytic activity and stability, a method of producing the electrode, and an electrochemical device using the electrode are provided. This electrode includes, as an oxygen catalyst, an oxide that has peaks at positions of 2θ = 30.07°±1.00°, 34.88°±1.00°, 50.20°±1.00°, and 59.65°±1.00° in an X-ray diffraction measurement using a CuKα ray and has constituent elements of bismuth, ruthenium, sodium, and oxygen.

## Description

### TECHNICAL FIELD

This disclosure relates to an electrode used for oxygen reactions, a method of producing the electrode, and an electrochemical device using the electrode.

### BACKGROUND

Oxygen reactions herein include the reduction of oxygen, the generation of oxygen, and both reactions in the electrochemical reactions. For example, in an air battery that uses an alkaline aqueous solution such as a lithium hydroxide aqueous solution, a potassium hydroxide aqueous solution, and a sodium hydroxide aqueous solution, as an electrolyte, the following reactions in which hydroxide ions (OH⁻) are produced in the alkaline aqueous solution in the reduction of oxygen and hydroxide ions in the alkaline aqueous solution are oxidized in the generation of oxygen are known:

Reduction: O₂ + 2H₂O + 4e⁻ -> 4OH⁻ ... (1),

and

Oxidation: 4OH⁻ -> O₂ + 2H₂O + 4e⁻ ... (2).

Such oxygen reactions occur at the positive electrode in the air battery. In an air primary battery, the reduction reaction in formula (1) occurs at the time of the discharge. In an air secondary battery, formula (1) occurs in the discharge similarly to the air primary battery, while the oxidation reaction in formula (2) occurs in the charge. Such battery is referred to as an air battery because oxygen in the air can be used for the discharge, and the positive electrode of the air battery is referred to as an air electrode for the same reason. However, oxygen used in the reaction of formula (1) is not necessarily oxygen in the air, and it may be, for example, high purity oxygen.

The oxygen reduction reaction at the air electrode of the air battery that uses the alkaline aqueous solution as described above is identical to the oxygen reduction reaction at the oxygen cathode of brine electrolysis that produces caustic soda and chlorine by electrolysis. Thus, these reactions can use identical catalysts. Such catalyst used for the oxygen reactions is herein referred to as an oxygen catalyst. The oxygen reduction reaction also occurs at the cathode of an alkaline fuel cell during power generation. Thus, the identical oxygen catalysts can be used for the air electrode of the air battery, the oxygen cathode of the brine electrolysis, and the cathode of the alkaline fuel cell. Furthermore, the charge reaction at the air electrode of the air secondary battery is formula (2), which is identical to the oxygen generation reaction at the anode of alkaline water electrolysis. Therefore, these reactions can use identical oxygen catalysts. As described above, the catalyst for the reduction of oxygen, the generation of oxygen, or both reactions is herein referred to as an oxygen catalyst.

Any of the above air battery, brine electrolysis, alkaline fuel cell, and alkaline water electrolysis use the alkaline aqueous solution as the electrolyte, and its operating temperature is from the room temperature to around 90 °C. That is, the oxygen reactions that use the alkaline aqueous solution as the electrolyte are oxidation reaction and reduction reaction between oxygen and hydroxide ions in such temperature range. There are other electrochemical reactions that reduce oxygen or generate oxygen. For example, the reaction at the cathode of a solid oxide fuel cell (abbreviation: SOFC) is reduction reaction from oxygen to oxide ions (O²⁻). The reaction at the anode of a solid oxide water electrolyzer (abbreviation: SOEC) is oxidation reaction from oxide ions to oxygen. Any of these reactions are reactions at high temperatures around from 600 °C to 1000 °C. The reactions of oxygen thus have different reaction mechanisms depending on temperature. The oxygen catalyst suitable for these reaction mechanisms naturally differ. Such difference in reaction mechanism results in significant differences in action mechanism and effect of the oxygen catalyst.

For example, even if it was found that one oxygen catalyst has high catalytic activity at high temperatures of 600 °C or more, this oxygen catalyst does not necessarily have high catalytic activity similarly at temperatures of 100 °C or less. It is extremely difficult even for those skilled in the art to analogize or infer this kind of thing. Further, in general, the catalyst in the electrochemical reactions at lower temperature, for example, at low temperature around the room temperature makes it difficult to develop higher catalytic activity for higher temperature. It is also difficult to find an oxygen catalyst having higher catalytic activity at lower temperature at which it is used. Moreover, not only the catalytic activity of the oxygen catalyst but also its stability greatly vary depending on temperature and reaction mechanism.

On the other hand, as an air battery that operates at a temperature of 100 °C or less similarly to the air battery that uses the alkaline aqueous solution as the electrolyte, a lithium air secondary battery is known. Although this lithium air secondary battery is still under development, since lithium, which has a property of explosively reacting with water, is used as a reactant in the negative electrode, an organic solvent or ionic liquid with lithium salt added is usually used as the electrolyte, instead of an aqueous solution. However, when a lithium ion conductive solid electrolyte is applied to the lithium negative electrode, the solid electrolyte can prevent lithium from directly contacting water, which enables a configuration such as lithium / the solid electrolyte / the alkaline aqueous solution (liquid electrolyte) / the air electrode. Thus, the electrode of this disclosure can be also used as an air electrode with such configuration. One example of such lithium ion conductive solid electrolyte is an oxide abbreviated to LTAP having a NASICON-type crystal structure. The oxygen reactions of a lithium air secondary battery using the lithium negative electrode with the lithium ion conductive solid electrolyte applied, together with the alkaline aqueous solution are expressed by formula (1) and formula (2) as described above.

In contrast, in a lithium air secondary battery using a non-aqueous electrolyte such as an organic solvent or ionic liquid with lithium salt added, the following formulas are known as reactions of the air electrode:

Reduction: O₂ + 2e⁻ -> O₂²⁻ ... (3),

and

Oxidation: O₂²⁻ -> O₂ + 2e⁻ ... (4).

It is known that O₂²⁻ in these formulas does not exist in the electrolyte as an ion, but is deposited in the air electrode as Li₂O₂ (solid). O²⁻ in the oxygen reactions at high temperature as described above and O₂²⁻ in formula (3) and formula (4) above are completely different ions. There is a difference in that the reactions in formula (1) and formula (2) above are 4-electron reactions, while the reactions in formula (3) and formula (4) are 2-electron reactions. However, these oxygen reactions in formula (1) to formula (4) all progress in the temperature range of around 100 °C or less. Moreover, assuming that the reaction in each of formula (3) and formula (4) has further progressed by two electrons, the oxidation or reduction would progress to the state of the 4-electron reaction such as in formula (1) or formula (2). Thus, the oxygen catalyst having high catalytic activity for the 4-electron reactions such as in formula (1) and formula (2) is expected to similarly exhibit high catalytic activity for the 2-electron reactions such as in formula (3) and formula (4), which occurs in a similar temperature region.

Here, as an air primary battery that uses the alkaline aqueous solution as the electrolyte, a zinc air primary battery that uses zinc for the negative electrode has been put to practical use as a power source for hearing aid. Similar air primary batteries that use metal such as magnesium, calcium, aluminum, and iron other than zinc for the negative electrode have been developed. An air primary battery that uses the alkaline aqueous solution as the electrolyte and uses magnesium for the negative electrode has been commercialized as an emergency power source. On the other hand, an air secondary battery that uses the alkaline aqueous solution as the electrolyte has not been put to practical use yet, except for a mechanically rechargeable zinc air secondary battery that mechanically (physically) exchanges the negative electrode or the electrolytic solution to regenerate the discharge function. Then, a zinc air secondary battery that is not mechanically rechargeable and a hydrogen/air secondary battery that uses hydrogen absorbing alloys for the negative electrode have been developed. In these secondary batteries, the reactions of the negative electrode are different, but the reactions of the positive electrode (air electrode) are identical and expressed by the reaction formulae of formula (1) and formula (2). The inventor of this disclosure has disclosed a hydrogen/air secondary battery in PTL 1.

Materials that have been used or considered so far for the oxygen catalyst at not only the air electrode of the air battery as described above, but also the oxygen cathode of the brine electrolysis, the cathode of the alkaline fuel cell, and the anode of the alkaline water electrolysis include numerous materials such as: noble metal such as platinum, silver, and gold and their alloys; platinum group metals and other transition metal elements, and alloys including them; various oxides and sulfides; doped or undoped carbon-based materials (including carbon having various crystal structures and forms, such as graphite, amorphous carbon, glassy carbon, carbon nanotube, carbon nanofiber, and fullerene); and various nitrides, carbides, and metallic organic compounds. Among them, as the oxides, oxides having crystal structures referred to as pyrochlore, perovskite, and spinel are known as the oxygen catalysts and disclosed in, for example, PTLs 1 to 4.

Specifically, PTL 1 describes a positive electrode of an air secondary battery that uses an alkaline aqueous solution as an electrolyte, and the positive electrode includes a nickel coating material including: a core material having a density lower than that of nickel; and a covering layer that contains nickel and/or nickel alloy, which coats the core material. PTL 1 discloses a catalyst that contains bismuth iridium oxide and/or bismuth ruthenium oxide with which this nickel coating material is mixed.

PTL 2 discloses a positive electrode catalyst of a metal air battery having an atomic ratio expressed by LaₓSr₃₋ₓFe_{2-y}Co_{y}O₇. PTL 2 describes that this catalyst exhibits excellent alkali tolerant and catalytic activity because at least a part of the Sr site of Sr₃Fe₂O₇ has been substituted by La or at least a part of the Fe site has been substituted by Co.

PTL 3 discloses an air battery including a negative electrode, an electrolyte layer interposed between an air electrode and the negative electrode, and an electrode catalyst, in which the electrode catalyst includes an oxide (oxide electrode catalyst) having activity for at least the oxygen reduction reaction, and the oxide electrode catalyst preferably contains at least one metal element selected from iron, cobalt, nickel, titanium, manganese, and copper and has a perovskite structure or a spinel structure.

PTL 4 discloses a method for producing a catalyst for an air secondary battery for use in an air electrode of the air secondary battery, the method comprising: a precursor preparation step of preparing a pyrochlore-type oxide precursor, a calcination step of calcining the pyrochlore-type oxide precursor to form a pyrochlore-type oxide, and an acid treatment step of immersing the pyrochlore-type oxide obtained from the calcination step in an acidic aqueous solution to apply an acid treatment, and such pyrochlore-type oxide includes an oxygen deficient type bismuth ruthenium oxide.

PTL 5 discloses an air electrode catalyst for air secondary battery including a pyrochlore-type complex oxide expressed by a general formula: A₂₋ₓB_{2-y}O_{7-z} (where x, y, and z meet the relationships of 0 ≤ x ≤ 1, 0 ≤ y ≤ 1, and -0.5 ≤ z ≤ 0.5, respectively, and A represents at least one element selected from Bi, Pb, Tb, La, Ce, Pr, Nd, Pm, Sm, Eu, Gd, Dy, Ho, Er, Tm, Yb, Lu, Mn, Y, Zn, and Al, and B represents at least one element selected from Ru, Ir, Si, Ge, Ta, Sn, Hf, Zr, Ti, Nb, V, Sb, Rh, Cr, Re, Sc, Co, Cu, In, Ga, Cd, Fe, Ni, W, and Mo), the pyrochlore-type complex oxide including two or more crystal structures with different amounts of oxygen.

Here, as for the composition of an oxide having a pyrochlore structure, the general atomic ratio is A₂B₂O₇ for an A site element (A), a B site element (B), and oxygen (O) in the crystal structure. However, it has been reported in numerous cases that the atomic ratios obtained from analysis results with actual oxides are not always such integers.

For example, as a bismuth ruthenium oxide (hereinafter, abbreviated to BRO) having a pyrochlore structure in which the A site is bismuth (Bi) and the B site is ruthenium (Ru), each BRO with an atomic ratio expressed by:

Bi₂Ru₂O₇,

Bi₂Ru₂O_{6.9},

Bi₂Ru₂O_{6.92},

Bi_{1.87}Ru₂O_{6.903},

Bi_{1.88}Ru₂O_{6.906},

Bi_{1.9}Ru₂O_{6.922},

Bi_{1.9}Ru₂O_{6.928}, and

Bi_{1.9}Ru₂O_{6.901}

has been registered in the database in International Centre for Diffraction Data. The BRO is thus known to have different atomic ratios depending on the synthetic method and the synthesis conditions and is a compound whose composition is likely to change.

On the other hand, the oxygen catalyst that uses the alkaline aqueous solution as the electrolyte is required to simultaneously have chemical and electrochemical stabilities under a strong alkaline environment and high catalytic activity for the oxygen reduction and/or the oxygen generation. That is, the oxygen catalyst is required to reduce not oxygen of the oxygen catalyst itself on its surface but oxygen in the air, and/or generate oxygen from hydroxide ions in the electrolyte, while keeping its own composition constant, for the reactions of oxygen with a strong oxidizing atmosphere that occur under the strong alkaline, highly corrosive environment. In the case of the oxygen reactions using a non-aqueous electrolyte, the oxygen catalyst is required to reduce oxygen in the air and/or generate oxygen from O₂²⁻, while keeping its own composition constant. In the case of the compound whose composition is likely to change, such as the BRO, a slight difference in composition (atomic ratio) may provide high catalytic activity, while the oxygen reactions may change the composition of the catalyst itself to degrade the catalytic activity. There are many examples where the initial catalytic activity and its continuity are incompatible.

In addition, PTL 4 points out a problem that by-products formed during the synthesis of the oxygen deficient type BRO decrease the discharged capacity of the air secondary battery with a relatively small number of cycles. Furthermore, for this problem, PTL 4 discloses that: an atomic ratio of Bi to Ru decreases by immersing the BRO obtained by the synthesis in an acid solution such as a nitric acid solution for a certain period of time, washing it with ion exchanged water, and then drying it (this operation is described as the "acid treatment"); the acid treatment improves the maintenance rate of the discharged capacity against the charge and discharge cycle with respect to a BRO to which such acid treatment is not applied; etc.

Here, for the oxide having the pyrochlore structure, with respect to the above general atomic ratio A₂B₂O₇, when the atomic ratio of oxygen is less than 7, it is referred to as an oxygen deficient type, and the atomic ratio of oxygen is more than 7, it is referred to as an oxygen excess type.

### CITATION LIST

### Patent Literature

PTL 1: JP2016152068A
PTL 2: JP2018149518A
PTL 3: JP2015046403A
PTL 4: JP2019179592A
PTL 5: JP2020126754A

### SUMMARY

### (Technical Problem)

The BRO forms a pyrochlore structure with three elements of two metal elements, bismuth (Bi) at the A site and ruthenium (Ru) at the B site, and oxygen (O). The BRO has been expected to have high catalytic activity in both oxygen reduction and oxygen generation as the oxygen catalyst, also for the oxygen reactions that use any electrolyte of an aqueous solution such as the alkaline aqueous solution, or the non-aqueous electrolyte, as described above. The BRO has been developed also as an oxygen catalyst of the air electrode of the air secondary battery, which is required to have high catalytic activity in both oxygen reduction and oxygen generation. However, the BRO has different atomic ratios of Bi, Ru, and O depending on its synthetic method or synthesis conditions. That is, the BRO is a compound whose composition is likely to change. Further, the BRO degrades the cycle characteristics of the air secondary battery because by-products formed during the synthesis cause reactions. One factor of the composition instability of the BRO is dissolution of the A site element, Bi. The formation of the by-products containing Bi during the BRO synthesis is a factor in degradation of the cycle characteristics. For this, PTL 4 discloses a method of applying the acid treatment to the synthesized BRO, but this method has two steps of synthesizing the BRO once and then further applying the treatment to it, which increases the number of steps to obtain the oxygen catalyst and changes the composition and the particle size of the BRO with this treatment.

Furthermore, at particle sizes larger than nanoparticle, physical-chemical properties in the inside (bulk) of and on the surface of the particle are different. However, in the case of the nanoparticle, such difference is less likely to be noticed, making it difficult to obtain the stability of the bulk on the surface. Here, the particle size is the size of what is called a primary particle and differs from the size of a secondary particle in which the primary particles are bonded or aggregate. On the other hand, the oxygen reactions occur on the surface of the oxygen catalyst, and thus the nanoparticles of the oxygen catalyst are required to have composition stability and uniformity from the surface to the bulk, but there is no oxygen catalyst that meets such requirement, including the BRO.

There has been also a problem that, for the reason as described above, it is difficult for the electrode that uses the BRO as the oxygen catalyst to maintain high catalytic activity and stability for the oxygen reactions that occur at the electrode, due to the problem of the BRO.

Furthermore, there has been a problem that there is no method of producing an electrode that can maintain high catalytic activity and stability for the oxygen reactions. There has been also a problem that there is no electrochemical device including an electrode that maintains high catalytic activity and stability for the oxygen reactions.

That is, in order to maintain high catalytic activity in the electrode used for the oxygen reactions, an electrode including an oxygen catalyst with better composition stability is desired. In addition, an electrode including an oxygen catalyst having a good charge balance between cations and anions in the whole oxide is required by solving the conventional problems of the oxygen catalyst such as the decrease in the composition stability and the decrease in long maintainability. Furthermore, it is desired an electrode including an oxygen catalyst having a smaller particle size, particularly a smaller particle size at the nanoparticle level, to achieve higher catalytic activity per unit weight even with an identical composition.

Furthermore, a method of producing an electrode that can maintain high catalytic activity and stability for the oxygen reactions is desired. An electrochemical device including an electrode that maintains high catalytic activity and stability for the oxygen reactions is also desired.

This disclosure has been made in view of these circumstances, and its object is to provide an electrode used for oxygen reactions, the electrode excellent in catalytic activity and stability, provide a method of producing the electrode, and provide an electrochemical device using the electrode.

### (Solution to Problem)

In order to solve the above problems, an electrode of this disclosure has the following constitution. The electrode of this disclosure is an electrode used for oxygen reactions, and the electrode is characterized in including, as an oxygen catalyst, an oxide having peaks at positions of 20 = 30.07°±1.00°, 34.88°±1.00°, 50.20°±1.00°, and 59.65°±1.00° in an X-ray diffraction measurement using a CuKα ray and having constituent elements of bismuth, ruthenium, sodium, and oxygen. 20 in the X-ray diffraction measurement means a diffraction angle of the diffracted X-ray, and hereinafter, this diffraction angle is simply referred to as 2Θ. Further, the "oxide having constituent elements of bismuth, ruthenium, sodium, and oxygen" herein does not exclude impurities that are inevitably generated during the production of the oxygen catalyst of this disclosure.

This constitution includes sodium as the constituent element, unlike the BRO having the pyrochlore structure, to first increase the stability of the composition in terms of the balance of charge. Simultaneously, the uniformity of the composition from the inside to the surface improves at the nanoparticles, and by-products during the synthesis are decreased. Thus, an electrode that can stably maintain the catalytic activity for the oxygen reactions can be provided. In particular, the improvement in composition stability decreases the composition change as caused by dissolution of Bi at the oxygen catalyst in the electrode of this disclosure, unlike an electrode using the BRO as an oxygen catalyst.

The oxide used as the oxygen catalyst in the electrode of this disclosure (hereinafter, simply referred to as the oxygen catalyst) can be obtained, as described in Examples below, by preparing an aqueous solution in which respective metal salts of bismuth and ruthenium, for example, metal nitrate and metal chloride are dissolved, adding a sodium hydroxide aqueous solution to this mixed solution, precipitating metal hydroxide in the agitated and mixed solution, and calcining the precipitate at a predetermined temperature. In this case, the above mixed solution contains an introduction promoter and a stabilizer as described later, having an action to promote introduction of sodium ions into the metal hydroxide so that the metal hydroxide contains sodium ions in addition to bismuth ions and ruthenium ions, and to stabilize the precipitation of the metal hydroxide in such state at nano-size.

The oxygen catalyst obtained by such method has diffraction peaks when 2Θ value is 14.82°, 30.07°, 34.88°, 38.17°, 45.88°, 50.20°, 59.65°, 62.61°, 73.80°, 81.68°, and 84.28° in the X-ray diffraction using the CuKα ray. However, any 20 values have a range of about ±1.00°. Among them, the diffraction peaks at 30.07°, 34.88°, 50.20°, and 59.65° occur with higher diffraction intensities compared with the others. That is, the oxygen catalyst used in the electrode of this disclosure uses an oxide that has a crystal structure in the above-described X-ray diffraction pattern and contains bismuth, ruthenium, sodium, and oxygen.

The oxygen catalyst used in the electrode of this disclosure can be obtained by the method of first depositing and precipitating the metal hydroxide in a solution and calcining the precipitate, as described above. In the case of such solution process, a sodium salt solution is added to a metallic salt solution to make the hydrogen ion exponent (hereinafter, referred to as pH) of the solution alkaline. In this case, the metallic salt solution is required to contain a component that acts on the introduction promotion of sodium into the metal hydroxide and the stabilization. That is, it is difficult to obtain a metal oxide that contains bismuth, ruthenium, and sodium, such as the oxygen catalyst used in the electrode of this disclosure, only by bismuth ions, ruthenium ions, and sodium ions existing in the solution and by making the pH of the solution alkaline. For example, in the absence of the sodium introduction promoter and stabilizer as described above, even if the BRO can be obtained, it is difficult to obtain the oxygen catalyst used in the electrode of this disclosure that contains sodium in addition to bismuth, ruthenium, and oxygen as the constituent elements and has a structure different from the pyrochlore structure.

Even if the material obtained under the conditions without the sodium introduction promoter and stabilizer is the BRO from the result of the diffraction peak by the X-ray diffraction method normally used for crystal structure analysis, and the result exhibiting sodium in addition to bismuth and ruthenium is obtained from the analysis result by the energy dispersive X-ray analysis method normally used for the analysis of the type and composition of elements, this does not mean that the BRO contains sodium. The reason is that, in the case of the conditions without the sodium introduction promoter and stabilizer, an oxide that contains sodium such as BiNaOa is likely to be generated as a by-product. In the measurement by the X-ray diffraction method, if the amount of such by-product is proportionally small, the diffraction peak is not indicated. On the other hand, the energy dispersive X-ray analysis method can detect elements at a higher sensitivity than the X-ray diffraction method and detect all elements existing in an object even in the case of a small amount of by-product, in which the peak does not occur in the X-ray diffraction method, thus obtaining the result that sodium is detected in addition to bismuth and ruthenium when the BRO and BiNaO₃ are mixed. However, they are different compounds, not one compound. Therefore, what elements are contained in the crystal structure of a certain oxide only becomes evident after analyzing the crystal structure in finer area, for example, becomes clear by the X-ray absorption fine structure analysis (XAFS) as described later. Even in the conditions with the sodium introduction promoter and stabilizer, when the mixing and agitation of the metallic salt solution are insufficient or when the amount of the metallic salt solution is large and the time for mixing and agitation is short in relation to the amount of the solution, the oxide that has the crystal structure in the above-described X-ray diffraction pattern and contains bismuth, ruthenium, sodium, and oxygen, such as the oxygen catalyst used in the electrode of this disclosure, may not be obtained.

The temperature for calcining the metal hydroxide varies according to conditions other than the temperature for calcination, such as a type of solvent used for the solution when causing the precipitation of the metal hydroxide, a type of the metal salt to be used and its concentration in the solution, a method of drying the precipitated metal hydroxide, and its conditions. For example, in the method using the aqueous solution as described above, the case in which the calcination temperature is lower than 300 °C is usually unpreferable because the structural change from the hydroxide state to the oxide is unlikely to occur sufficiently. The case in which the calcination temperature exceeds 800 °C is unpreferable because the oxide may decompose. In the case of Examples described later, the range of 450 °C to 650 °C is preferable, and the range of 550 °C to 600 °C is more preferable. However, the method of producing the oxygen catalyst used in the electrode of this disclosure is not limited to only the above method. Various production methods can be used, such as methods called a sol-gel method and a hydrothermal synthesis method, and a method of preliminarily preparing a bismuth oxide, a ruthenium oxide, and a sodium oxide and adding mechanical, thermal, and electrical energies to the prepared one to produce an oxide by solid-phase reaction or semisolid-phase reaction.

Here, the sodium salt solution in the above method includes, but is not limited to, the sodium hydroxide aqueous solution as a typical example. However, it is necessary to be able to make the pH alkaline so as to cause the precipitation of the metal hydroxide, and it is desirable that the anion of the sodium salt does not inhibit the introduction of sodium ions into the metal hydroxide and the stabilization.

The oxygen catalyst used in the electrode of this disclosure has the aforementioned crystal structure indicated by the X-ray diffraction pattern. As described later, when explained with reference to a theoretical pyrochlore structure indicated by A₂B₂O₇, the position of bismuth in this crystal structure is equivalent to the vicinity of the A site position, the position of ruthenium is almost equivalent to the B site position in the identical structure, and the position of sodium is equivalent to the position in the vicinity of the A site or in the vicinity of the B site. The oxygen catalyst used in the electrode of this disclosure has a structure that is similar to the pyrochlore structure but different. Thus, when explaining here the meaning of "the vicinity of site" using the pyrochlore structure indicated by A₂B₂O₇ here, it means the position out of the site centers of the A site and the B site. The position of sodium is described to be in the vicinity of the A site or in the vicinity of the B site, but, as described later, sodium is more likely to exist in the vicinity of the A site. In the crystal structure, sodium, bismuth, and ruthenium are all cations, which are +1 valence, +3 valence, and +4 valence, respectively, as described later. It is considered that an oxide ion (-2 valence), which is an anion, and a bismuth ion, a ruthenium ion, and a sodium ion, which are cations, balance the overall charge of the oxide, which improves the composition stability and the long maintainability compared with the BRO and improves the uniformity at nanoparticles. Here, "the charge being balanced" in the metal oxide normally means that the total charge number of the cation and the total charge number of the anion are identical. If these numbers differ significantly, this is a factor that decreases the composition stability, the long maintainability, or the uniformity as described above. That is, the oxygen catalyst used in the electrode of this disclosure contains sodium ions in addition to bismuth ions, ruthenium ions, and oxide ions and has good balance of charge, which is considered to contribute to the generation of properties that are significantly different from those of the BRO.

The balance of charge in the oxygen catalyst used in the electrode of this disclosure is further explained. First, as described above, the oxide of the pyrochlore structure is represented by the general atomic ratio A₂B₂O₇. Here, when an atomic ratio of oxygen to the A site element is O/A and an atomic ratio of oxygen to the B site element is O/B, these atomic ratios are both 3.5. On the other hand, considering the aforementioned oxygen deficient type BRO similarly, the atomic ratio O/Ru of oxygen to Ru is less than 3.5.

However, in the oxygen catalyst used in the electrode of this disclosure, the atomic ratio O/Bi and the atomic ratio O/Ru are both more than 3.5. In the oxygen catalyst of this disclosure, the atomic ratio O/Bi and the atomic ratio O/Ru are both preferably 4 or less. This simply means that there are more anions, oxide ions (ionic formula: O²⁻) and proportionally fewer cations in the balance of charge, relative to the composition ratio of the general pyrochlore structure. However, the oxygen catalyst used in the electrode of this disclosure contains not only bismuth and ruthenium but also sodium. That is, the charge is balanced between these three metal ions and the oxide ions. As described in Examples below, the total charge number of the cations of these three metals and the total charge number of the only anion, the oxide ion are almost identical. That is, when (total charge number of anions)/(total charge number of cations) is defined as a total charge ratio, the oxygen catalyst used in the electrode of this disclosure has a total charge ratio of 0.9 or more and 1.1 or less. Here, when the atomic ratios of four elements: bismuth, ruthenium, sodium, and oxygen, which are contained in the oxygen catalyst used in the electrode of this disclosure, are K, L, M, and N, respectively, the total charge number of the anions is 2N, the total charge number of the cations is a value represented by (3K + 4L + M), and the total charge ratio is represented by 2N/(3K + 4L + M).

Furthermore, the reason that including sodium ions in the crystal structure in addition to bismuth ions and ruthenium ions, in the oxygen catalyst used in the electrode of this disclosure has an action to improve the composition stability and the long maintainability compared with the BRO and improve the uniformity at nanoparticles is explained from the coordination number and the ionic radius of the cation.

In the pyrochlore structure such as the BRO, the coordination number of the cation of the A site is 8. Here, the coordination number of the cation being 8 means that this cation is surrounded by eight nearest neighbor anions. The coordination number of the cation of the B site is 6. Normally, the radius of the ion in the solid crystal differs depending on the type of the element, the oxidation number, and the coordination number, and such data is publicly available in various books, data books, etc. As one example, for the bismuth ion, even having identical +3 valence, the ionic radius is 0.96 Å when the coordination number is 5, 1.03 Å when the coordination number is 6, and 1.17 Å when the coordination number is 8. The bismuth ion in the BRO is +3 valence, and it is at the A site. Thus, as described above, the coordination number is 8, and the ionic radius is 1.17 Å. The ruthenium ion is +4 valence, and it is at the B site. Thus, the coordination number is 6, and the ionic radius is 0.62 Å. On the other hand, the valence of the sodium ion is only +1 valence, but the ionic radius is 0.99 Å when the coordination number is 4, 1.00 Å when the coordination number is 5, 1.02 Å when the coordination number is 6, 1.12 Å when the coordination number is 7, 1.18 Å when the coordination number is 8, 1.24 Å when the coordination number is 9, and 1.39 Å when the coordination number is 12, and it is possible to take various coordination numbers from 4 to 12. Here, the difference between the ionic radius (1.18 Å) when the coordination number of the sodium ion is 8 and the ionic radius (1.17 Å) when the coordination number of the bismuth ion is 8 is 1 % or less. Therefore, if only the ionic radius is considered, it is predicted that the sodium ion can enter the position of the bismuth ion in the BRO. However, the sodium ion is +1 valence, and the bismuth ion is +3 valence. Thus, it is inferred to be difficult to make a structure in which a part of the bismuth ions is simply replaced with the sodium ions while maintaining the pyrochlore structure. That is, the oxygen catalyst used in the electrode of this disclosure has not a pyrochlore structure in which a part of the bismuth ions in the BRO is simply replaced with the sodium ions, but a structure that is similar to the pyrochlore structure but different. Thus, the sodium ion contributes to the stabilization of the oxide to be obtained, structurally and in the balance of charge, in the formation of the structure similar to that of pyrochlore.

Furthermore, it is important that the constituent elements of the oxygen catalyst used in the electrode of this disclosure are sodium in addition to bismuth, ruthenium, and oxygen. When using elements other than sodium, which are classified into alkali metal elements, it is difficult to obtain an oxygen catalyst having a structure similar to the pyrochlore structure, such as the oxygen catalyst used in the electrode of this disclosure. This is described in Comparative Examples below, but the reason that it is difficult with the other alkali metal elements can be also understood from the ionic radius. For example, as alkali metal elements, lithium is +1 valence and has an ionic radius of 0.92 Å when the coordination number is 8, potassium is +1 valence and has an ionic radius of 1.51 Å when the coordination number is 8, rubidium is +1 valence and has an ionic radius of 1.61 Å when the coordination number is 8, and cesium is +1 valence and has an ionic radius of 1.74 Å when the coordination number is 8. That is, structurally, when the coordination number is 8, only the sodium ion is close in ionic radius to the +3 valence bismuth ion. The ionic radius of the lithium ion is smaller than that of the +3 valence bismuth ion by 20 % or more, and the ionic radiuses of the other +1 valence cations are larger than that of the +3 valence bismuth ion by 29 % or more, and thus it is inferred to be very difficult to have a stable crystal structure.

The oxygen catalyst used in the electrode of this disclosure desirably has an atomic ratio Na/Ru of sodium to ruthenium of 0.285±0.015. The atomic ratio Na/Ru having this range of value has an action to be able to suppress structural distortion that occurs by including the bismuth ion and the sodium ion, which is close in ionic radius to the bismuth ion, together in the crystal structure similar to that of pyrochlore. The atomic ratio Na/Ru is preferably 0.286±0.013 and more preferably 0.275 to 0.297.

The oxygen catalyst used in the electrode of this disclosure desirably has an atomic ratio (Bi + Na)/Ru (referred to as a cation atomic ratio) of the sum of bismuth and sodium to ruthenium of 1.285±0.010. This has an action to be able to more suppress the above structural distortion. Furthermore, the oxygen catalyst used in the electrode of this disclosure desirably has a ratio (3Bi + Na)/4Ru (referred to as a cation charge ratio) of the sum (3Bi + Na) of the total charge number of bismuth and the total charge number of sodium to the total charge number of ruthenium 4Ru of 0.820±0.020. This has an action to make the balance between the total charge number of the cation and the total charge number of the anion closer to 1 to more improve the structural stability in terms of the balance of charge in the overall crystal structure. The cation charge ratio (3Bi + Na)/4Ru is preferably 0.821±0.015 and more preferably 0.810 to 0.833.

In the electrode of this disclosure, the oxygen reactions occur in an alkaline aqueous solution as an electrolyte. That is, the electrode of this disclosure is desirably used in a system where the alkaline aqueous solution is used as the electrolyte. The oxygen reactions that occur in the alkaline aqueous solution as the electrolyte are 4-electron reactions such as in formula (1) and formula (2), and the reactions such as in formula (1) and formula (2) are difficult to provide high catalytic activity, compared with 2-electron reactions such as in formula (3) and formula (4). However, the electrode of this disclosure has an action to be able to stably maintain high catalytic activity also for such 4-electron reactions.

In the electrode of this disclosure, the oxygen catalyst desirably has a primary particle size of 100 nm or less. This has an action to be able to increase the specific surface area of the oxygen catalyst, improve the catalytic activity per unit weight or per unit volume, and provide high catalytic activity even if the weight or volume of the electrode is reduced.

In the electrode of this disclosure, the oxygen catalyst desirably has a secondary particle size of 3 µm or less. The difference between the primary particle size and the secondary particle size is explained here. The primary particle size can be determined as the size of the crystal particle when the oxygen catalyst is observed with an electron microscope or the like. The secondary particle size is determined as the size of one agglomerate of bonded or aggregated crystal particles when the oxygen catalyst is similarly observed with an electron microscope or the like. For the secondary particle size, measurement methods by laser scattering, etc. are well known. That is, a smaller primary particle size increases the catalytic activity per unit weight or per unit volume of the oxygen catalyst, but even if the primary particle size is small, a larger agglomerate with the primary particles bonded or aggregated does not increase the catalytic activity. This is because the rate of the crystal particles of the oxygen catalyst that exists on the surface of the agglomerate of the oxygen catalyst decreases, while the rate of the crystal particles of the oxygen catalyst inside the agglomerate, which cannot contribute to the oxygen reactions, increases. Therefore, the catalytic activity is significantly affected by the primary particle size and the secondary particle size, and the catalytic activity of the electrode is also affected by the primary particle size and the secondary particle size. Thus, the secondary particle size of 3 µm or less has an action to be able to provide high catalytic activity. The primary particle size and the secondary particle size are not necessarily assumed to be the sizes of true spherical particles, and oxygen catalyst having: a shape other than a spherical shape; and an asymmetric shape are also targets. When the particle size is evaluated (measured) by image analysis, for example, the long diameter can be used as the particle size. The particle size may be determined with a laser diffraction particle size distribution analyzer.

In the air electrode of an air battery, the oxygen cathode of brine electrolysis, the cathode of an alkaline fuel cell, the anode of alkaline water electrolysis, etc., as described later, materials cheaper than the oxygen catalyst may be used as a conductive carrier to support an oxygen catalyst having a particle size smaller than that of the carrier on the carrier. In this case, if the secondary particle size of the oxygen catalyst is 3 µm or less as in the electrode of this disclosure, dispersing and supporting the oxygen catalyst on the carrier is facilitated to have an action to be able to suppress aggregation of the oxygen catalyst, thus improving the usage efficiency of the oxygen catalyst in the electrode.

The electrode of this disclosure desirably includes a catalytic layer that includes the oxygen catalyst, a conducting material, and a water-repellent material as constitutional materials. The conducting material applies the electron conductivity of the whole electrode and functions as a carrier that can disperse and support the oxygen catalyst. Further, the water-repellent material forms a flow pass, through which oxygen flows, inside the electrode to have an action to be smoothly able to take oxygen to reduce it inside the electrode and to generate oxygen inside the electrode to release it outside the electrode.

As the conducting material, a carbon material, metal, ceramic, etc. can be used here. The carbon material includes, but is not limited to, graphite, glassy carbon, fullerene, carbon nanotube, carbon nanofiber, and carbons having other structures. The metal is preferably a material that is chemically and electrochemically stable for the electrolyte and is unlikely to change in chemical state and structure by the oxygen reactions. The metal preferably includes, but is not limited to, for example, nickel and titanium regardless of the type such an aqueous solution and a non-aqueous electrolyte. The ceramic preferably has high stability for the electrolyte and the oxygen reactions and high electron conductivity. Silica and alumina themselves have low electron conductivity, but the material obtained by forming a conductive membrane of nickel or nickel alloy on the surface of such ceramic can also be used. For example, the surface of a silica particle can be covered with a thin metal or alloy membrane by technique such as non-electrolytic plating, and such particle on which the conductive membrane is applied can be used as the conducting material in the same way as the carbon material and metal. Furthermore, the core of such particle on which the conductive membrane is applied may be not only ceramic but also resin. The above-described candidate materials for the conducting material are all examples, and the use of other materials for the conducting material is not excluded.

The water-repellent material includes, fluororesin materials such as, in addition to conventionally used polytetrafluoroethylene (abbreviation: PTFE), tetrafluoroethylene-perfluoroalkyl vinyl ether copolymer (abbreviation: PFA), tetrafluoroethylene-hexafluoropropylene copolymer (abbreviation: FEP), polychlorotrifluoroethylene (abbreviation: PCTFE), tetrafluoroethylene-ethylene copolymer (abbreviation: ETFE), chlorotrifluoroethylene-ethylene copolymer (abbreviation: ECTFE), and polyvinylidene fluoride (abbreviation: PVDF). However, the above-described candidate materials of the water-repellent material are all examples, and other materials are not excluded.

Furthermore, polymers other than the above and organic-inorganic hybrid materials can be used as a water repellent agent. Available polymers include, but are not limited to, linear polymers such as polystyrene, polymethylmethacrylate, polyethylene, polypropylene, polyethylene terephthalate, polybutylene telephthalate, polysulfone, polycarbonate, and polyamide; divinylbenzen, hexatriene, divinyl ether, divinyl sulfone, diarylcarbinol, alkylene diacrylate, oligo or polyalkylene glycol diacrylate, alkylene triacrylate, alkylene tetraacrylate, alkylene trimethacrylate, alkylene tetramethacrylate, alkylene bisacrylamide, alkylene bis-methacrylamide, and both-end acrylic modified polybutadiene oligomer alone, or net polymers obtained by polymerizing each of these materials with another polymerizable monomer; thermosetting resins such as a phenol formaldehyde resin, a melamine formaldehyde resin, a benzoguanamine formaldehyde resin, and a urea formaldehyde resin; silane-containing monomers such as γ-(meth)acryloxypropyltrimethoxysilane, trimethoxysilylstyrene, and vinyl trimethoxysilane alone or resins obtained by copolymerizing each of these silane-containing monomers with another polymerizable monomer, and polymeric microparticles obtained by hydrolyzing and then cross-linking their hydrolyzable silyl groups; and organopolysiloxane resins such as dimethylpolysiloxane.

The electrode of this disclosure desirably uses graphite having different particle sizes as the conducting material. Graphite is excellent in oxidation resistance and thus unlikely to cause oxidative consumption, which can increase the stability as the conducting material, and the different particle sizes have an action that large graphite particles contribute to the formation of a flow pass for oxygen and small graphite particles contribute to highly dispersing and supporting of the oxygen catalyst by utilizing high specific surface area.

The electrode of this disclosure desirably includes a gas diffusion layer. Here, the gas diffusion layer is provided on the side into which oxygen flows, in the electrode used for oxygen reactions, that is, the side opposite to the electrolyte. The gas diffusion layer uses no oxygen catalyst or is not required to function as a reaction field of the oxygen reactions.

As such, the material and configuration of the gas diffusion layer that differs from the catalytic layer are not particularly limited. However, for example, the conducting material as described above, or the conducting material and the water-repellent material, etc. can be used as the constitutional materials. For example, a material obtained by mixing and kneading carbon powder of graphite, etc. and PTFE particles or a material obtained by supporting the PTFE particles on carbon fiber is formed into a thin membrane and used. The gas diffusion layer may have a multi-layer structure such as a double-layer structure in which, on a thin membrane with such configuration, a layer consisting of a conductive material is further laminated, without containing water-repellent materials such as the PTFE particles.

The gas diffusion layer has conductivity, but differs from the catalytic layer in that the gas diffusion layer uses no oxygen catalyst or is not required to function as a reaction field of the oxygen reactions as described above. The gas diffusion layer is positioned between the catalytic layer and a current collector described in the next paragraph to be able to provide a flow pass to smoothly supply the catalytic layer with oxygen or smoothly release oxygen generated in the catalytic layer to the outside of the electrode. Since the gas diffusion layer has conductivity, if the current collector described in the next paragraph is integrated with the gas diffusion layer and the gas diffusion layer is further integrated with the catalytic layer, the oxygen reactions on the surface of the current collector as in the case where the catalytic layer is integrated with the current collector will no longer occur, which has an action to be able to suppress alkali corrosion by the electrolytic solution in the current collector and oxidation corrosion by oxygen generated during charging. The case where the components of the gas diffusion layer include the water-repellent material has an action to suppress leakage of the liquid electrolyte from the electrode to the outside of the electrode.

The configuration of the electrode of this disclosure as described above is further explained. The electrode including the catalytic layer may have a current collector integrated with the catalytic layer for energization between the catalytic layer and an external circuit. As such current collector, as described in Examples later, a metal mesh such as a nickel mesh can be used. A metal plate and a metal wire may also be used, and a mesh, a plate, a wire, a foil, etc. using a conductive material other than metal may also be used. Furthermore, when the electrode of this disclosure include the gas diffusion layer together with the catalytic layer, the catalytic layer, the gas diffusion layer, and the current collector may be laminated in this order to be integrated. In this case, if the electrode of this disclosure is an air electrode, the electrode is used with the catalytic layer on the electrolyte side and the current collector on the atmosphere side.

The electrode of this disclosure is desirably formed into a thin plate and has a thickness of 250 µm or less. The thickness of 250 µm or less has an action to be able to supply the oxygen catalysts that exist in various places inside the electrode with oxygen without limiting the rate and smoothly release oxygen generated inside the electrode to the outside of the electrode.

The electrode of this disclosure desirably includes a water-repellent layer through which oxygen can permeate, on the atmosphere side of the catalytic layer or the gas diffusion layer. Further, the water-repellent layer is desirably made of water-repellent material particles. As the water-repellent material of the water-repellent layer, the materials as described above can be used. For example, the PTFE particles can be used, but the water-repellent material is not limited to the PTFE particles.

The water-repellent layer neither have the conductivity and the oxygen catalyst like the catalytic layer nor have the conductivity like the gas diffusion layer. The water-repellent layer has a function of preventing the liquid electrolyte such as the alkaline aqueous solution from leaking from the electrode and a function of enabling oxygen to sufficiently permeate toward the catalytic layer or the gas diffusion layer.

The particle size of the water-repellent material particle is desirably 1 µm or less and desirably 0.01 µm or more. The particle size of the water-repellent material particle in this range can prevent the leakage of an alkali solution as the electrolyte for a long time and enables the water-repellent layer to have sufficient oxygen permeability. A larger particle size of the PTFE particle expands voids in the water-repellent layer to be unable to prevent the leakage of the alkali solution as the electrolyte for a long time, which is not preferable. A smaller particle size of the PTFE particle makes the voids in the water-repellent layer smaller to reduce the area where oxygen can permeate through the water-repellent layer and limit the permeability rate, which is not preferable.

The catalytic layer or the gas diffusion layer including the water-repellent layer may be integrated with the above-described current collector. In this case, the side on which the catalytic layer or the gas diffusion layer is integrated with the current collector is the atmosphere side, and the water-repellent layer will be applied to one surface of such integrated structure.

The electrode including the water-repellent layer of this disclosure may have a structure in which the catalytic layer, the gas diffusion layer, and the current collector are laminated to be integrate, and the water-repellent layer is then formed from the side of the current collector, as one example. As such, the water-repellent material covers not only the surface of the gas diffusion layer but also the surface of the current collector to provide a function as an oxygen-permeable liquid electrolyte leakage prevention layer that can sufficiently supply the gas diffusion layer or the catalytic layer with oxygen while preventing the liquid electrolyte from leaking by the action of the water-repellent material in the water-repellent layer, even at a part where a gap is likely to occur between different materials such as an interface between the current collector and the conducting material in the gas diffusion layer.

The gap at the interface between the current collector and the conducting material in the gas diffusion layer, as described above, may occur due to the difference in physical properties such as rigidity and ductility, for example, in the application of the electrode of this disclosure, when the metal that is usually used as the current collector, and usual graphite as the conducting material are used. The size of this gap is assumed to be in a range from submillimeter order to dozens of nanometer order. The water-repellent material in the water-repellent layer can effectively fill such gap to produce an effect of preventing the liquid leakage. When the current collector is metal and the liquid electrolyte is the alkaline aqueous solution, the metal surface is hydrophilic, and the metal surface as the current collector can be a place as directing the flow of the liquid electrolyte. Thus, the water-repellent layer suppresses the flow of the liquid electrolyte by its water repellency to particularly effectively function to prevent the leakage of the liquid electrolyte.

The electrode of this disclosure is desirably the air electrode of an air battery, the oxygen cathode of brine electrolysis, the cathode of an alkaline fuel cell, or the anode of alkaline water electrolysis.

The electrode of this disclosure desirably includes a non-electronically conductive reaction space divider arranged on the electrolyte side, the reaction space divider including a plurality of electrolyte holder portions consisting of a concave space configured to hold a liquid electrolyte. This has an action to be able to suppress that, when the electrode of this disclosure is used in the air battery together with a metal negative electrode, disproportion of metal dendrite growth that occurs at the metal negative electrode and distribution at the negative electrode of metal and the oxidation product thereof as reactants in the negative electrode is caused according to the charge and discharge cycle to cause internal short-circuit to stop the operation and to considerably reduce the battery capacity due to the increase in charge and discharge cycle number.

A method of producing an electrode of this disclosure is a method of producing an electrode used for oxygen reactions, the method including a step 1 of synthesizing an oxygen catalyst being an oxide that has peaks at positions of 20 = 30.07°±1.00°, 34.88°±1.00°, 50.20°±1.00°, and 59.65°±1.00° in an X-ray diffraction measurement using a CuKα ray and has constituent elements of bismuth, ruthenium, sodium, and oxygen; and a step 2 of producing a catalytic layer that includes the oxygen catalyst, a conducting material, and a water-repellent material.

In the method of producing an electrode of this disclosure, an atomic ratio O/Bi of the oxygen to the bismuth and an atomic ratio O/Ru of the oxygen to the ruthenium are desirably both more than 3.5.

In the method of producing an electrode of this disclosure, the oxygen catalyst desirably has a secondary particle size of 3 µm or less, in the step 1.

In the method of producing an electrode of this disclosure, graphite having different particle sizes is desirably used as the conducting material, in the step 2.

The method of producing an electrode of this disclosure desirably includes a step 3 of forming a gas diffusion layer on the catalytic layer or integrating the catalytic layer with a gas diffusion layer.

The method of producing an electrode of this disclosure desirably includes a step 4 of including a current collector integrated with the catalytic layer or a gas diffusion layer, applying a suspension containing a water-repellent material on a surface opposite to the side in contact with an electrolyte, and then, applying heat treatment. Relatively high hydrophilic materials such as metal are often used for the current collector in the case of the electrode in which the oxygen reactions occur, as in this disclosure. When the metal current collector is porous such as a mesh, the current collector is integrated with the catalytic layer or the gas diffusion layer, and this integrated part in contact with metal may be a path that leaks an aqueous solution or a liquid electrolyte other than the aqueous solution, because of its hydrophilicity. It is desired to suppress the possibility of such slight liquid leakage to stably maintain the electrode of this disclosure for a long time. Applying the water-repellent material to the electrode as described above and applying heat treatment to support the water-repellent material have an action to be able to effectively suppress the liquid leakage for a long time.

As the application method, various methods such as dropping, brushing, and spraying can be used. As the water-repellent material, the above-described materials can be used, but the water-repellent material is not limited to the materials described herein. Too little supported amount of the water-repellent material reduces the effect of suppressing the liquid leakage as described above, and too much supported amount obstructs the place where oxygen flows in the catalytic layer or the gas diffusion layer, which are both not preferable. As one example, when PTFE is used as the water-repellent material in an electrode having a configuration such as in Example 5 and Example 6, which are described later, the amount of the supported water-repellent material is desirably in a range of more than 0.001 g/cm² and less than 0.12 g/cm² per electrode area.

The method of producing an electrode of this disclosure can accomplish the above-described electrode.

An electrochemical device of this disclosure uses the above-described electrode. The electrochemical device of this disclosure is any of an air battery, a brine electrolyzer, an alkaline water electrolyzer, an alkaline fuel cell, or a water electrolysis and fuel cell device that uses an alkaline aqueous solution as the electrolyte.

In the electrochemical device of this disclosure, the air battery has a negative electrode active material, which is desirably hydrogen, lithium, sodium, potassium, magnesium, calcium, or zinc.

The electrochemical device of this disclosure can enjoy action effects of the above-described electrode.

### (Advantageous Effect)

The electrode of this disclosure provides the following effects by using an oxygen catalyst including sodium as a constituent element, unlike the BRO having the pyrochlore structure. In the oxygen catalyst, the stability of the composition in terms of the balance of charge is high, the long maintainability improves, and the uniformity of the composition from the inside to the surface also improves also when making the oxygen catalyst into nanoparticles. Thus, it is possible to provide an electrode that can provide high catalytic activity for the reduction of oxygen and/or the generation of oxygen with long-term use, regardless of the type of the liquid electrolyte.

By having the oxygen catalyst that improves the composition stability and its long maintainability, and the composition uniformity and suppresses the formation of by-products, high catalytic activity and stability for the oxygen reduction and/or the oxygen generation can be simultaneously provided. This decreases reaction overpotential at the air electrode of the air battery, the oxygen cathode of the brine electrolysis, the cathode of the alkaline fuel cell, and the anode of the alkaline water electrolysis. The discharge voltage of the air primary battery increases. The discharge voltage of the air secondary battery increases, and the charge voltage of the air secondary battery decreases. The electrolysis voltage at the brine electrolysis decreases. The voltage of the alkaline fuel cell increases. The electrolysis voltage at the alkaline water electrolysis decreases. Then, these are maintained.

The increase in discharge voltage at the air primary battery improves the energy density and the power density of the air battery. The increase in discharge voltage and the decrease in charge voltage at the air secondary battery improve the energy density, the power density, the voltage efficiency, and the energy efficiency. These are also maintained.

The decrease in electrolysis voltage at the brine electrolysis can decrease the electric power intensity and the electric energy intensity of chlorine and caustic soda to be produced to reduce the electric cost in the production. The increase in voltage at the alkaline fuel cell improves the energy density and the power density. The decrease in electrolysis voltage at the alkaline water electrolysis can decrease the electric power intensity and the electric energy intensity of hydrogen to be produced to reduce the electric cost in the production. The water electrolysis and fuel cell device that uses the alkaline aqueous solution as the electrolyte can enjoy the effect of the above-described alkaline water electrolysis and alkaline fuel cell.

Furthermore, the electrode of this disclosure eliminates the need for the post-process as disclosed in PTL 4 on the oxygen catalyst, such as the acid treatment to remove the by-products from the synthesized material obtained after the BRO synthesis. This can more reduce the production cost of the air primary battery and the air secondary battery, the production cost of chlorine and caustic soda produced by the brine electrolysis, the production cost of the alkaline fuel cell, and the production cost of hydrogen for the alkaline water electrolysis, with respect to the air electrode of the air battery, the oxygen cathode of the brine electrolysis, the cathode of the fuel cell, or the anode of the alkaline water electrolysis, which uses the BRO catalyst. The price of sodium is 1/1000 or less of those of bismuth and ruthenium, which can significantly reduce the raw material cost with respect to the BRO. Thus, a cheaper electrode can be provided.

Furthermore, the method of producing an electrode of this disclosure can provide an electrode having excellent characteristics as described above. Moreover, the method of producing an electrode of this disclosure can reduce the number of steps required to produce the electrode having excellent characteristics as described above to reduce the cost for the production.

Furthermore, the electrode of this disclosure can provide an electrochemical device such as an air battery, a brine electrolyzer, an alkaline water electrolyzer, an alkaline fuel cell, or a water electrolysis and fuel cell device that uses an alkaline aqueous solution as an electrolyte, which has the effects as described above.

### BRIEF DESCRIPTION OF THE DRAWINGS

In the accompanying drawings:
FIG. 1 is a diagram that illustrates the structure of an electrode according to a first embodiment;
FIG. 2 is a diagram that illustrates the structure of an electrode according to a second embodiment;
FIG. 3 is a diagram that illustrates the structure of an electrode according to a third embodiment;
FIG. 4 is a diagram that illustrates the structure of an electrode according to a fourth embodiment;
FIG. 5 is a result of the X-ray diffraction measurement for oxygen catalysts used in electrodes of Example 1 and Example 2;
FIG. 6 is a result of the X-ray diffraction measurement for an oxygen catalyst used in an electrode of Comparative Example 1;
FIG. 7 is a result of the X-ray diffraction measurement for the oxygen catalyst used in the electrode of Example 1 and an oxide of Comparative Example 2;
FIG. 8 is a SEM image illustrating a surface aspect of the oxygen catalyst used in the electrode of Example 1;
FIG. 9 is a relationship diagram between the primary particle size and the frequency of the oxygen catalyst used in the electrode of Example 1;
FIG. 10 is a schematic diagram explaining the structure of an electrode used for evaluation of catalytic activity;
FIG. 11 is a relationship diagram between the specific activity and the electrode potential for the oxygen generation of the electrodes of Example 1, Example 2, and Comparative Example 1; and
FIG. 12 is a relationship diagram between the specific activity and the electrode potential for the oxygen reduction of the electrodes of Example 1, Example 2, and Comparative Example 1.
FIG. 13 is a particle size distribution diagram of unground graphite and ground graphite;
FIG. 14 is a shape diagram of a nickel mesh;
FIG. 15 is a relationship diagram (particle size distribution) between the secondary particle size and the frequency of an oxygen catalyst before a grinding process;
FIG. 16 is a relationship diagram (particle size distribution) between the secondary particle size and the frequency of the oxygen catalyst after the grinding process;
FIG. 17 is a schematic view of a three-electrode measuring cell used for evaluation of an electrode;
FIG. 18 is a relationship diagram between the electrode potential and the current density of Example 3;
FIG. 19 is a relationship diagram between the electrode potential and the current density of Example 4;
FIG. 20 is a diagram that compares the relationships between the electrode potential and the current density of Example 3 and Example 4; and
FIG. 21 is a diagram that compares the relationship between the charging and discharging potential and the time of Example 6 with cycle number.

### DETAILED DESCRIPTION

The following describes embodiments and examples of an electrode, a method of producing the electrode, and an electrochemical device according to this disclosure. The electrode, the method of producing the electrode, and the electrochemical device according to this disclosure are not limited to these embodiments or examples.

### (First embodiment)

The structure of an electrode according to this embodiment is described. The electrode according to this embodiment is an electrode used for oxygen reactions, and the electrode may include, as at least its oxygen catalyst, an oxide having peaks at positions of 2Θ = 30.07°±1.00°, 34.88°±1.00°, 50.20°±1.00°, and 59.65°±1.00° in an X-ray diffraction measurement using a CuKα ray and having constituent elements of bismuth, ruthenium, sodium, and oxygen. The following describes a preferred configuration example of the electrode according to this embodiment.

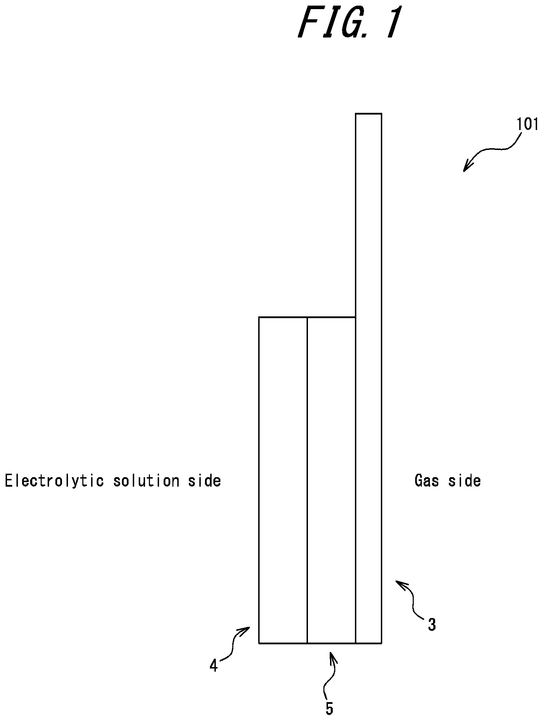

FIG. 1 illustrates an electrode 101 according to this embodiment. The electrode 101 includes a catalytic layer 4, a gas diffusion layer 5, and a current collector 3. In the electrode 101, the catalytic layer 4, the gas diffusion layer 5, and the current collector 3 are laminated in this order. In the electrode 101, the catalytic layer 4 is arranged on the side in contact with an electrolytic solution. In the electrode 101, the current collector 3 is arranged on the gas side (atmosphere side). The catalytic layer 4 includes a conducting material, an oxygen catalyst, and a water-repellent material as the constitutional materials. The gas diffusion layer includes no oxygen catalyst.

The gas diffusion layer 5 is a gas (oxygen, atmosphere)-permeable layer. The gas diffusion layer 5 is gas-permeable and includes a conducting material and a water-repellent material similar to those of the catalytic layer 4, as its constitutional materials, to have water repellency for the permeation of the electrolytic solution from the catalytic layer 4 side. The gas diffusion layer 5 may have a double-layer structure in which two layers using the conducting material with different sizes and shapes are bonded. As the gas diffusion layer 5, a commercially available gas diffusion layer for fuel cell may be used.

The current collector 3 and the gas diffusion layer 5 may be closely attached to keep electron conductivity or may be integrally shaped by pressing, etc. The catalytic layer 4 and the gas diffusion layer 5 may also be integrated by pressing.

The catalytic layer 4 may have a thickness of 50 to 300 µm, and the gas diffusion layer 5 may have a thickness of 50 to 500 µm. As the current collector 3, a nickel mesh with a mesh opening of around 100 mesh to 200 mesh is preferably used. Oxygen cannot permeate through the current collector 3 if there is no openings like a mesh. Nickel is stable for an alkaline aqueous solution and thus preferable as a material of the mesh. However, in a state where the electrolytic solution (alkaline aqueous solution) does not permeate to the current collector, the material of the mesh is not necessarily limited to nickel.

### (Second embodiment)

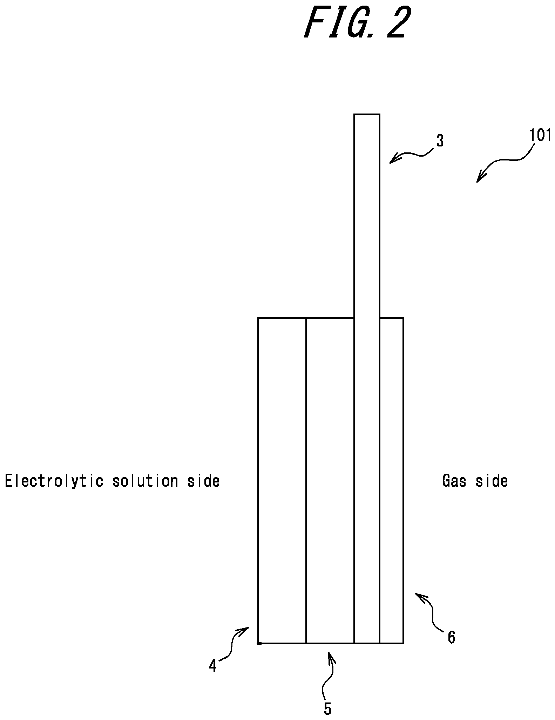

As illustrated in FIG. 2, an electrode 102 according to a second embodiment is obtained by further providing a water-repellent layer 6 to the electrode 101 according to the first embodiment. The gas diffusion layer 5 has a function of suppressing or preventing the permeation of the electrolytic solution. However, the water-repellent layer 6 is preferably provided as in the electrode 102, which is described below, to prevent the permeation or leakage of the electrolytic solution for a long time.

In the electrode 102, the catalytic layer 4, the gas diffusion layer 5, the current collector 3, and the water-repellent layer 6 are laminated in this order. In the electrode 102, the catalytic layer 4 is arranged on the side in contact with the electrolytic solution. In the electrode 102, the water-repellent layer 6 is arranged on the gas side (atmosphere side). The water-repellent layer 6 prevents the electrolytic solution from leaking to the gas side of the electrode 102. Simultaneously, oxygen required for the reactions must be able to permeate through the water-repellent layer 6. As the water-repellent layer 6, for example, a commercially available PTFE porous membrane may be used. The water-repellent layer 6 may be formed by spraying and drying PTFE particles as water-repellent material particles from the current collector 3 side. In this case, the gap between the PTFE particles becomes a path through which oxygen permeates.

The water-repellent layer 6 is not required to be conductive. Thus, the water-repellent layer 6 is not arranged between the current collector 3 and the gas diffusion layer 5 and between the current collector 3 and the catalytic layer 4. If there is a material that satisfies all of electron conductivity, oxygen permeability, water repellency, and alkaline resistance, a water-repellent layer different from the water-repellent layer 6 may be arranged on the electrolytic solution side of the current collector 3.

### (Third embodiment)

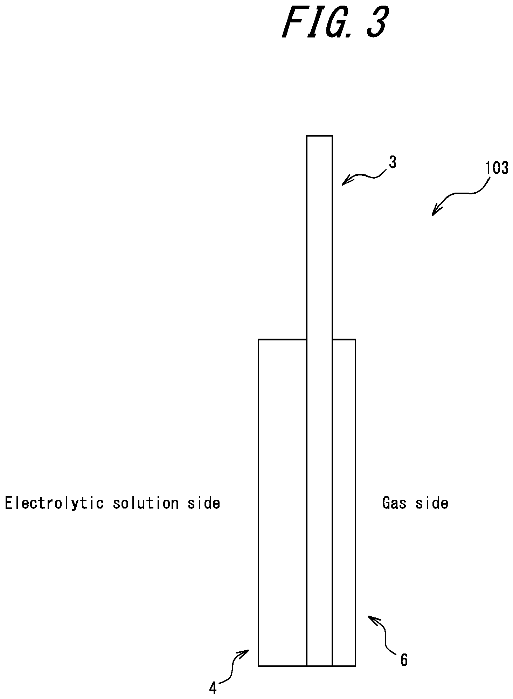

As illustrated in FIG. 3, an electrode 103 according to a third embodiment is obtained by removing the gas diffusion layer 5 in the electrode 102 according to the second embodiment. The electrode 103 is not required to have the gas diffusion layer 5.

### (Fourth embodiment)

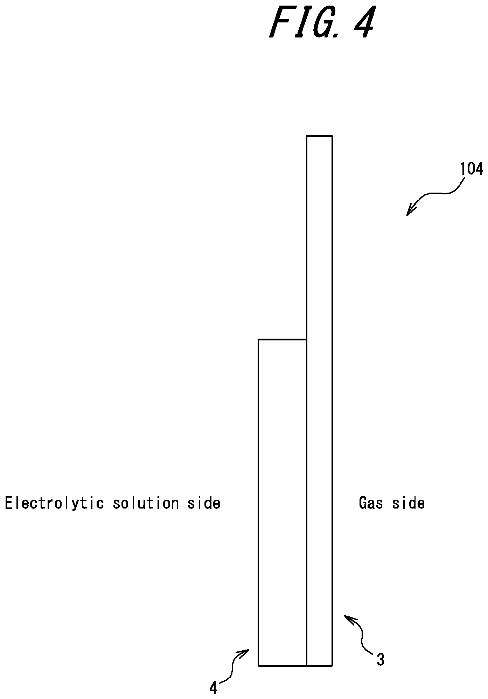

As illustrated in FIG. 4, an electrode 104 according to a fourth embodiment is obtained by removing the gas diffusion layer 5 in the electrode 101 according to the first embodiment. When the electrode of this disclosure is used as the anode of alkaline water electrolysis by being immersed in the alkaline aqueous solution as the electrolyte, the electrode may have a configuration consisting of the catalytic layer 4 and the current collector 3 as the electrode 104 illustrated in FIG. 4. In such application as the anode, the gas is not required to be introduced from the atmosphere into the electrode 104 as the anode, and the problem of the leakage of the electrolytic solution to the gas side no longer exists. Therefore, the configuration without the gas diffusion layer 5 (refer to FIG. 1 and FIG. 2) and the water-repellent layer 6 (refer to FIG. 2 and FIG. 3) is also possible.

### (Example 1)

The following describes this disclosure with examples. In the following procedure, an oxide to be used as an oxygen catalyst in an electrode of Example 1 (hereinafter, may be simply referred to as the oxygen catalyst) was synthesized (one example of step 1). First, tetra-n-propylammonium bromide (abbreviation: TPAB, purity: 98.0 %) was dissolved in distilled water in a beaker, and then added to distilled water at 75 °C with a hot stirrer. The concentration was set to about 9.0 × 10⁻¹ mol/L. In the following, this solution is a TPAB solution. TPAB has a role of the aforementioned introduction promoter and stabilizer.

Next, ruthenium(III) chloride-n-hydrate (Ru content rate: 43.25 %) and bismuth(III) nitrate pentahydrate (purity: 99.5 %) were weighed, and each was dissolved in distilled water. The concentrations of these solutions were both about 1.8 × 10⁻¹ mol/L. The solution of bismuth(III) nitrate pentahydrate was subjected to ultrasonic agitation for about 5 minutes. Hereinafter, the respective solutions were referred to as a Ru solution and a Bi solution.

Next, the TPAB solution, the Ru solution, the Bi solution, and distilled water were mixed at 75 °C with predetermined amounts to prepare a metallic salt solution with the total amount of 500 mL. The Ru concentration and the Bi concentration in this metallic salt solution were both 7.44 × 10⁻³ mol/L, and the TPAB concentration was 3.72 × 10⁻² mol/L. After this metallic salt solution was agitated and mixed at 75 °C for 1 hour, a separately prepared 2 mol/L NaOH (sodium hydroxide) aqueous solution of 60 mL was added. After this, with keeping the temperature at 75 °C, this solution was subjected to agitation for 24 hours while blowing oxygen at 50 mL/min (while oxygen bubbling).

After the end of the agitation, this solution was allowed to stand for another 24 hours to obtain a precipitate. This precipitate was taken out and evaporated to dryness for about 2 hours in an electric furnace at 105 °C. The thus obtained dried solid material was transferred to an evaporating dish and then dried in the electric furnace at 120 °C for 3 hours. The material after drying was ground in a Menor mortar and then held and calcined in the electric furnace at 600 °C for 1 hour. The material obtained after the calcination was filtered by suction using distilled water at 75 °C, an aspirator, and a paper filter. The material on the paper filter was collected and then dried in the electric furnace at 120 °C for 3 hours. Thus, the oxygen catalyst (oxide) used in the electrode of Example 1 was obtained.

In the above operation, the relationship between the Ru concentration, the Bi concentration, and the TPAB concentration is important. TPAB has a role as the introduction promoter and stabilizer for sodium, but too much or too little TPAB relative to the Ru and Bi concentrations is unpreferable. Too much TPAB is unpreferable because the introduction of sodium into the metal hydroxide is inhibited. On the other hand, too little TPAB is unpreferable because the stabilization of the metal hydroxide containing sodium is insufficient and the particle size of the oxygen catalyst to be obtained increases, making it difficult to obtain the oxygen catalyst at nano-level. In the oxygen catalyst used in the electrode of Example 1, the TPAB concentration is 5 times higher than the Ru concentration. For example, if the TPAB concentration is 1 time, TPAB is insufficient, and if the TPAB concentration exceeds 20 times, TPAB is excess. Both cases are unpreferable because TPAB cannot function as the introduction promoter and stabilizer. Such introduction promoter and stabilizer are not limited to TPAB, and other materials can also be used.

### (Example 2)

An oxygen catalyst used in an electrode of Example 2 was similarly obtained, except that the TPAB solution, the Ru solution, the Bi solution, and distilled water were mixed at 75 °C with predetermined amounts and the Bi concentration in the metallic salt solution with the total amount of 500 mL was changed from 7.44 × 10⁻³ mol/L to 6.96 × 10⁻³ mol/L, in the synthesis of the oxygen catalyst used in the electrode of Example 1.

### (Comparative Example 1)

An oxide used in an electrode of Comparative Example 1 was similarly obtained, except that the NaOH aqueous solution was changed to a LiOH (lithium hydroxide) aqueous solution, in the synthesis of the oxygen catalyst used in the electrode of Example 1

### (Comparative Example 2)

An oxide synthesized in Comparative Example 2 is similar to that in Example 1, except that the following acid treatment is additionally applied to the oxygen catalyst used in the electrode of Example 1. The oxygen catalyst synthesized by the procedure described in Example 1 of 0.145 g and 0.1 mol/L nitric acid solution of 12 mL were put into a container and subjected to ultrasonic agitation for 30 minutes, and after the ultrasonic agitation, the agitated solution was allowed to stand for 1 hour (acid treatment). After this, the supernatant fluid was removed, distilled water of 12 mL was added for cleaning, the ultrasonic agitation was performed for 30 minutes, and then, the agitated solution was allowed to stand for 1 hour. Subsequently, the supernatant fluid was removed, the same amount of distilled water was added again for further cleaning, the ultrasonic agitation was performed for the same period, and then, the agitated solution was filtered by suction using distilled water until the pH of filtrate became 7. The preceding operation was performed at the room temperature. After this, the material on the paper filter was taken out and then dried at 120 °C for 3 hours, obtaining an oxide of Comparative Example 2.

### (X-ray diffraction measurement)

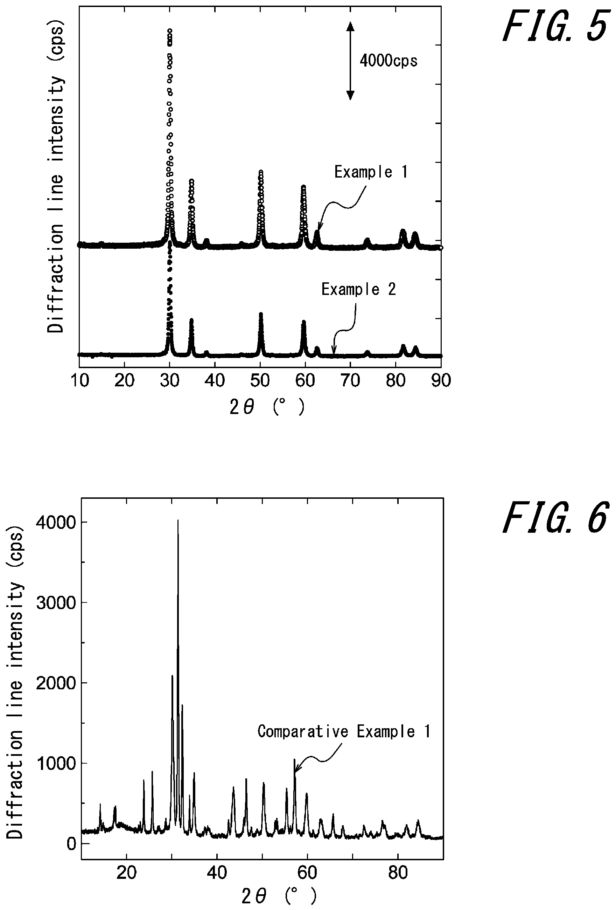

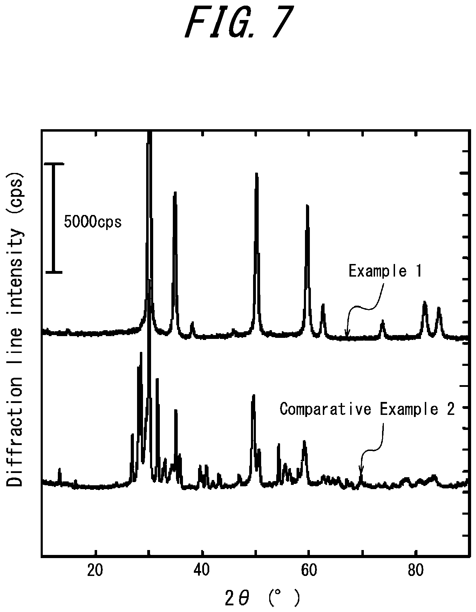

The oxygen catalysts used in the electrodes of Example 1 and Example 2 and the oxides of Comparative Example 1 and Comparative Example 2 were analyzed by an X-ray diffractometer (made by Rigaku, Ultima IV) using CuKα ray (wavelength: 1.54 Å). Measurement conditions included a voltage of 40 kV, a current of 40 mA, a range of a diffraction angle 2Θ (hereinafter, may be simply referred to as 20) of 10 to 90°, and a step angle of 0.020°. FIG. 5 and Table 1 illustrated the results of Example 1 and Example 2, FIG. 6 illustrated the result of Comparative Example 1, and FIG. 7 illustrated the comparison of the results of Example 1 and Comparative Example 2.

As illustrated in FIG. 5 and Table 1, the oxygen catalysts of Example 1 and Example 2 were found to be oxides that have diffraction peaks when the mean value of 2θ values (20 mean value) is 14.82°, 30.07°, 34.88°, 38.17°, 45.88°, 50.20°, 59.65°, 62.61°, 73.80°, 81.68°, and 84.28° by the X-ray diffraction measurement using the CuKα ray. The 20 mean value in Table 1 is presented by synthesizing a plurality of oxides for each of Example 1 and Example 2, determining respective 20 values for all of them, calculating respective mean values of 20 values for Example 1 and Example 2, and obtaining the mean value of these two mean values. That is, the 20 mean value in Table 1 is the mean value of Example 1 and Example 2.

In both of the oxygen catalyst used in the electrode of Example 1 and the oxygen catalyst used in the electrode of Example 2, the diffraction peaks when the 2Θ mean value is 30.07°, 34.88°, 50.20°, and 59.65° occur with higher diffraction intensity compared with those of the other values among the above 20 values. This is characteristic of the oxygen catalyst used in the electrode of this disclosure. Theoretically, the diffraction intensity in the X-ray diffraction measurement tends to become significantly weaker as the particle size of an object decreases, particularly, to the nano-level. Therefore, the above characteristic 20 values characterize the oxygen catalyst used in the electrode of this disclosure even if it is a particle having several tens of nanometers, as described later. The result in FIG. 5 had no diffraction peak that indicates the presence of by-products other than the oxygen catalyst used in the electrode of this disclosure.

Next, as illustrated in FIG. 6, the result of Comparative Example 1 detected diffraction lines (diffraction peaks) at numerous 2θ values, which were different from the diffraction peaks of the oxygen catalysts used in the electrodes of Example 1 and Example 2. This detection result found that the oxide of Comparative Example 1 was a compound having a structure different from that of the oxygen catalyst of this disclosure. That is, it was found that the oxygen catalyst used in the electrode of this disclosure could not be obtained when replacing the sodium hydroxide aqueous solution of Example 1 with the lithium hydroxide aqueous solution of Comparative Example 1. It was also suggested that the oxygen catalyst used in the electrode of this disclosure included sodium in the crystal structure.

Furthermore, as illustrated in FIG. 7, the result of Comparative Example 2 detected diffraction lines at obviously different and numerous 20 values, compared with the result of Example 1. This detection result found that the crystal structure of the oxygen catalyst obtained in Example 1 had changed to a different crystal structure by the acid treatment. That is, it was found that the acid treatment as described in PTL 4 had no effect of removing impurities on the oxygen catalyst used in the electrode of this disclosure and rather had an influence of changing the structure of the oxygen catalyst used in the electrode of this disclosure. Such difference also found that the oxygen catalyst of this disclosure is a compound different from the BRO disclosed in a plurality of documents including PTL 4.

**[Table 1]**

| Example 1 20 (°) | Example 2 20 (°) | 2Θ mean value (°) |
|---|---|---|
| 14.79 | 14.85 | 14.82 |
| 30.06 | 30.09 | 30.07 |
| 34.85 | 34.91 | 34.88 |
| 38.17 | 38.18 | 38.17 |
| 45.88 | 45.88 | 45.88 |
| 50.18 | 50.23 | 50.20 |
| 59.62 | 59.68 | 59.65 |
| 62.58 | 62.64 | 62.61 |
| 73.70 | 73.90 | 73.80 |
| 81.64 | 81.72 | 81.68 |
| 84.23 | 84.34 | 84.28 |

### (Particle observation)

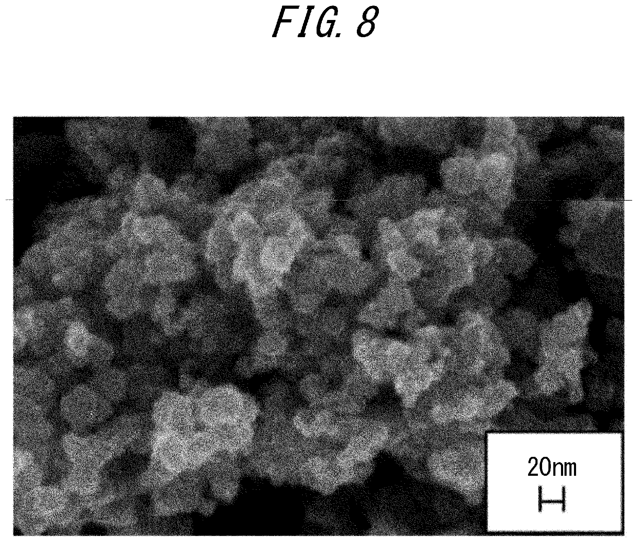

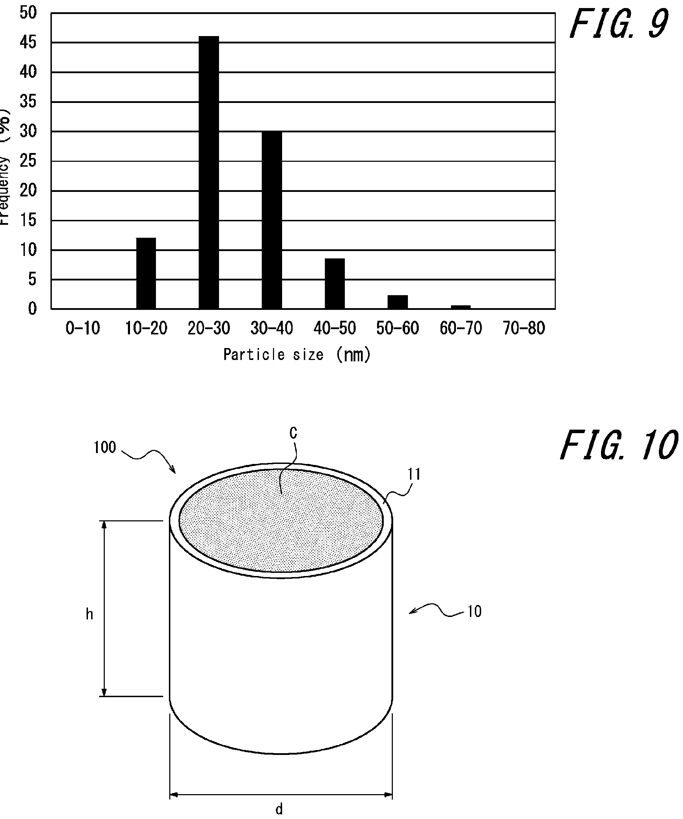

For the particle size of the oxygen catalyst of this disclosure, as one example, the oxygen catalyst used in the electrode of Example 1 was observed by a scanning electron microscope (abbreviation: SEM, made by ZEISS, ULTRA 55), the long diameter of each particle was determined from the SEM image by image analysis (image processing), and this long diameter was defined as a primary particle size of the oxygen catalyst of Example 1 to obtain the frequency distribution. The long diameter is the longest distance between two parallel lines that contact the outline of a particle in the SEM image of the particle. FIG. 8 illustrates a SEM image with which the particle size was observed. FIG. 9 illustrates the frequency distribution analysis result of the particle size obtained from such SEM image. The analysis of the frequency distribution was conducted for at least 250 or more particles. Thus, the oxygen catalyst used in the electrode of Example 1 was obtained as nanoparticles having a particle size distribution being across the range of 10 to 70 nm as a whole and having higher frequencies at 20 to 30 nm. Similar observation and particle size analysis were conducted for Example 2, and the result was almost identical to that of Example 1.

### (Energy dispersive X-ray elemental analysis (abbreviation: EDX))

An energy dispersive X-ray elemental analyzer (made by AMETEK, Genesis APEX2) attached to the aforementioned scanning electron microscope device obtained atomic ratios of sodium, bismuth, and ruthenium for the oxygen catalysts used in the electrodes of Example 1 and Example 2. In this case, the acceleration voltage was set to 15 kV, and the cumulative time was set to 500 seconds, the maximum time that could be set on the device.

### (Rutherford backscattering spectroscopy (abbreviation: RBS))

Rutherford backscattering spectroscopy equipment (made by National Electrostatics, Pelletron 3SDH) obtained atomic ratios of bismuth, ruthenium, and oxygen for the oxygen catalysts used in the electrodes of Example 1 and Example 2. In this case, bismuth and ruthenium were analyzed from the measurement result using He ions as incident ions, and oxygen was analyzed from the measurement result using H ions. Based on these analysis results, each of an atomic ratio Ru/Bi of ruthenium to bismuth, an atomic ratio O/Bi of oxygen to bismuth, and an atomic ratio O/Ru of oxygen to ruthenium was obtained. Among them, Table 2 presented the atomic ratio O/Bi and the atomic ratio O/Ru.

### (Analysis of atomic ratio of four elements)

When obtaining the atomic ratio of four elements: bismuth (Bi), ruthenium (Ru), sodium (Na), and oxygen (O) from the results of the aforementioned EDX and RBS, bismuth, ruthenium, sodium, and oxygen as atoms may be referred to as Bi, Ru, Na, and O, respectively, in the following.

Here, the atomic ratio of O is given as a value with respect to Bi in the result of the RBS, and the atomic ratio of Na is given as a value with respect to Bi in the result of the EDX. On the other hand, the atomic ratios of Bi and Ru are given from each of the EDX and the RBS. Thus, there are two ways to obtain the atomic ratio of the four elements, depending on whether the result of the EDX or the RBS is used, for Bi and Ru atoms. Therefore, Table 3 presented the respective results of the atomic ratios calculated by these two ways. In the atomic ratio of Bi, Ru, Na, and O (atomic ratio of four elements) in Table 3, the case using the result of the EDX for the atomic ratios of Bi and Ru was indicated as EDX, and the case using the result of the RBS for the atomic ratios of Bi and Ru was indicated as RBS. Table 4 presented the total charge ratio calculated using these values, the atomic ratio Na/Ru, the cation atomic ratio, and the cation charge ratio. This disclosure evaluates the oxygen catalysts based on the result in Table 2, as well as the results of the RBS in Table 3 and Table 4. That is, the oxygen catalysts are evaluated based on the atomic ratios each obtained in the RBS in Table 2 to Table 4, and the results of the EDX in Table 3 and Table 4 are treated as references.

**[Table 2]**

| | Atomic ratio O/ Bi | Atomic ratio O/R u |
|---|---|---|
| Example 1 | 3.57 | 3.63 |
| Example 2 | 3.60 | 3.54 |

**[Table 3]**

| | | Bi:Ru:Na:O (atomic ratio of four elements) |
|---|---|---|
| Example 1 | EDX | 17.26:16.41:4.68:61.64 |
| | RBS | 17.17:16.87:4.65:61.31 |
| Example 2 | EDX | 16.90:17.14:5.09:60.87 |
| | RBS | 16.89:17.18:5.09:60.84 |

**[Table 4]**

| | | Total charge ratio | Atomic ratio Na/Ru | Cation atomic ratio | Cation charge ratio |
|---|---|---|---|---|---|
| Example 1 | EDX | 1.01 | 0.285 | 1.34 | 0.860 |
| | RBS | 0.992 | 0.276 | 1.29 | 0.832 |
| Example 2 | EDX | 0.979 | 0.297 | 1.28 | 0.814 |
| | RBS | 0.978 | 0.296 | 1.28 | 0.811 |

### (X-ray absorption fine structure analysis)

For the oxygen catalyst of Example 1, an X-ray absorption fine structure (XAFS) spectrum was measured, and information on chemical states of bismuth and ruthenium was obtained from the absorption near edge structure (X-ray Absorption Near Edge Structure (abbreviation: XANES)) in this spectrum. The measurement used equipment of High Energy Accelerator Research Organization (BL12C, NW10A) and Aichi Synchrotron Radiation Center (BL1N2). The result found that the valence was +3 from the analysis result of the XANES spectrum at the L3 edge of Bi and that the valence was +4 from the analysis result of the XANES spectrum at the K edge of Ru. The valence of the cation of Na is only +1 valence. The total charge ratio and the cation charge ratio in Table 4 were calculated using the valences of the above respective elements and the atomic ratio of the four elements presented in Table 3.

Next, information on local structure of the oxygen catalyst was obtained from the Extended X-ray Absorption Fine Structure (trivial name: EXAFS) that appeared on the side of high energy of about 100 eV or more, with respect to the absorption edge. First, as a result of comparing a FT-EXAFS spectrum obtained from the EXAFS spectrum at the L3 edge of Bi (which is equivalent to a radial distribution function and indicates the atomic distance in the crystal structure) with a FT-EXAFS spectrum obtained theoretically assuming that Bi occupied the A site in the A₂B₂O₇ structure (hereinafter, theoretically obtained FT-EXAFS spectrum is abbreviated to theoretical spectrum), the measurement spectrum had a peak intensity smaller than that of the theoretical spectrum. The reason that the peak intensity of the measurement spectrum is thus smaller than that of the theoretical spectrum is that the actual structure is different or there is a difference in atomic distance, with respect to a crystal structure assumed when obtaining the theoretical spectrum, that is, the A₂B₂O₇ structure, resulting in distortion. On the other hand, with respect to a peak originating from the first nearest neighbor Bi-O component of 1.6 to 2.2 Å in the theoretical spectrum, the measurement spectrum had a peak equivalent to the first nearest neighbor Bi-O component at 1.2 to 2.0 Å. These results found that, in the oxygen catalyst of Example 1, Bi existed in the vicinity of the A site when assuming the A₂B₂O₇ structure, but at the position away from the center of this site.

Similarly, as a result of comparing a FT-EXAFS spectrum at the K edge of Ru with a FT-EXAFS spectrum obtained theoretically assuming that Ru occupied the B site in the A₂B₂O₇ structure, the measurement spectrum and the theoretical spectrum had almost identical intensities. The theoretical spectrum had a peak originating from the first nearest neighbor Ru-O component at 1.2 to 1.6 Å, while the measurement spectrum also had a peak equivalent to the first nearest neighbor Bi-O component at 1.2 to 1.8 Å. The peak positions considered to be the second nearest neighbor Ru-O-Ru other than this were also almost identical. These results found that, in the oxygen catalyst of Example 1, Ru was positioned on the B site when assuming the A₂B₂O₇ structure.

Furthermore, a FT-EXAFS spectrum at the K edge of Na was compared with a FT-EXAFS spectrum obtained theoretically in each case when assuming Na occupied the A site or the B site in the A₂B₂O₇ structure. As the result, the measurement spectrum had a peak intensity smaller than that of each of the A site occupying theoretical spectrum and the B site occupying theoretical spectrum. The measurement spectrum indicated a peak (1) at 1.2 to 2.0 Å and also a peak (2) at 2.0 to 2.8 Å, the longer distance side. On the other hand, the A site occupying theoretical spectrum had a peak originating from the first nearest neighbor Na-O component at 1.6 to 2.6 Å, which was correlated to the peak (2), and the B site occupying theoretical spectrum had a peak originating from the first nearest neighbor Na-O component at 0.7 to 2.1 Å, which was correlated to the peak (1). These results indicated that, in the oxygen catalyst of Example 1, Na exists at the position near the A site and the position near the B site when assuming the A₂B₂O₇ structure. As described above, considering high similarity in ionic radius between the +3 valence bismuth ion and +1 valence sodium ion, Na is likely to be positioned more in the vicinity of the A site than the B site, in the structure assuming the A₂B₂O₇ structure.

NaBiO₃ measured as a reference sample was different from the catalyst of this disclosure in each of first, the rise of the absorption edge in the XANES spectrum at the K edge of Na, the shape of spectrum, and the main peak position. The FT-EXAFS spectrum at the K edge of Na for NaBiO₃ did not indicate two peaks such as the above peak (1) and peak (2). The above further supported that the catalyst of this disclosure did not include by-products including sodium such as NaBiO₃ and that sodium existed in the crystal structure.

The above results found that the oxygen catalyst used in the electrode of this disclosure had not the pyrochlore structure such as the BRO, but a structure similar to pyrochlore but different from that of the BRO, in which sodium was considered to be arranged in the vicinity of the A site and in the vicinity of the B site in pyrochlore. Furthermore, as a result of performing the analysis identical to the above on the oxygen catalyst used in the electrode of Example 2, a result indicating the trend identical to that of Example 1 for the valence and the atomic distance was obtained.

### (Production of electrode)

It was produced an electrode in which each of the oxygen catalysts of Example 1 and Example 2 and the oxide of Comparative Example 1 was supported on a titanium disk, which was a conducting material, in the following method. First, the oxygen catalyst or the oxide was ground in a mortar. Then, the ground powder was added to a sample bottle to be 3.77 g/L using distilled water as a dispersion medium, and ultrasonic dispersion was performed at an ultrasonic generator for 2 hours to obtain the suspension. As illustrated in FIG. 10, a cylindrically formed titanium disk 10 (diameter d of 4.0 mm, height h of 4.0 mm, hereinafter, referred to as the titanium disk 10) was put in acetone to be subjected to ultrasonic cleaning, and then, the above suspension was dropped with 10 µL on one surface 11 (one-side bottom of the cylinder) of the titanium disk and naturally dried for 24 hours, obtaining an electrode 100 in which the oxygen catalyst or the oxide was supported in the form of a uniform film on the one surface 11 of the titanium disk 10. FIG. 10 indicates the oxygen catalyst or the oxide, which is supported in the film form, as an oxide layer C. No fixative was used when fixing the oxygen catalyst or the oxide to the titanium disk 10.

### (Electrochemical measurement)

The aforementioned electrode was mounted on a rotating electrode device to be a working electrode. This working electrode and a platinum plate (area: 25 cm²) were immersed in 0.1 mol/L potassium hydroxide aqueous solution in an identical container. The pH of the potassium hydroxide aqueous solution was 13 or more. In another container, a commercially available mercury/mercury oxide electrode similarly immersed in 0.1 mol/L potassium hydroxide aqueous solution was prepared. These two potassium hydroxide aqueous solutions were connected one another through a liquid junction similarly filled with 0.1 mol/L potassium hydroxide aqueous solution. Using a three-electrode electrochemical cell having such configuration, the electrochemical measurement was performed by adjusting the temperature of the aqueous solution at 25 °C. The measurement was performed by the linear sweep voltammetry, using a commercially available electrochemical measurement device and electrochemical software. The linear sweep voltammetry is a method of measuring the current flowing through the working electrode while changing the potential of the working electrode at a constant scanning rate. The current flowing during this measurement is a current of the reaction that occurs in the oxygen catalyst supported on the electrode. That is, the titanium disk alone does not cause the reduction of oxygen and the generation of oxygen in a wide potential range, and the above measurement method thus can measure the reaction current that occurs only in the oxide layer C.

The measurement of an oxygen reduction current was performed as follows. First, nitrogen was blown into the aqueous solution in which the working electrode was immersed at a flow rate of 30 mL/min for 2 hours or more. Then, after removing dissolved oxygen, the measurement was performed while blowing nitrogen. After this, oxygen was blown at the identical flow rate for 2 hours or more, and the measurement was performed again while further blowing oxygen. Then, a value obtained by subtracting the current measured while blowing nitrogen from the current measured while blowing oxygen was set as the reduction current of oxygen. A value obtained by dividing this oxygen reduction current by the surface area of the titanium disk was set as an oxygen reduction current density. The thus obtained result indicating the relationship between the potential of the working electrode and the oxygen reduction current density was used for creating the Tafel plot described later. During the above measurement, the working electrode was used with being rotated at 1600 rpm (min⁻¹). Specifically, the electrode was mounted on the rotating disk electrode device with the surface (one surface 11), to which the oxygen catalyst of the titanium disk 10 was fixed, downward (one example of the rotating disk electrode), and it was rotated at a constant rate in a state in which the oxygen catalyst was immersed in the electrolytic solution. Such measurement is called a Rotating Disk Electrode (RDE) method. The scanning rate that means an amount of change of the potential per unit of time was set to 1 mV/s.

After performing the above-described measurement of the oxygen reduction current, an oxygen generation current was measured. The measurement of the oxygen generation current was performed under atmosphere open conditions without blowing nitrogen and oxygen. The oxygen generation is a reaction that oxygen is generated from hydroxide ions, and thus it has no relation with the blowing of nitrogen and oxygen. The measurement of the oxygen generation current was also performed by the linear sweep voltammetry at a scanning rate of 1 mV/s, while rotating the working electrode at 1600 rpm, similarly to that of the oxygen reduction current.

### (Specific activity)

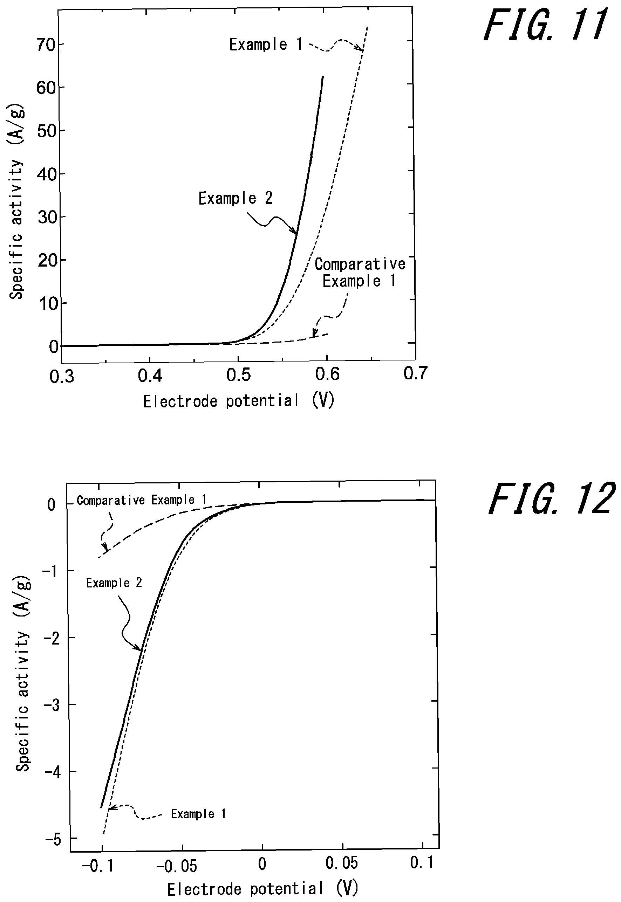

For the linear sweep voltammogram obtained in the above method (the result indicating the relationship between the potential and the current of the working electrode, which was obtained by the linear sweep voltammetry), in order to remove the influence by the difference in amount of the supported oxygen catalyst, a value obtained by dividing a current value (A) during the oxygen reduction or the oxygen generation by the catalyst weight (g) was used as a specific activity. The unit of the specific activity is A/g. The supported amount of the oxygen catalyst was 35 µg to 43 µg. FIG. 11 illustrates the thus created result of the electrode potential and the specific activity for the oxygen generation. FIG. 12 illustrates the result of the electrode potential and specific activity for the oxygen reduction. The short dashed line, the solid line, and the long dashed line in FIG. 11 and FIG. 12 represent Example 1, Example 2, and Comparative Example 1, respectively.

When comparing the specific activities at an electrode potential of 0.6 V from the result in FIG. 11, it was found that Example 1 was 14.5 times and Example 2 was 29.0 times as high as Comparative Example 1, and thus Example 1 and Example 2 had catalytic activities 10 times or higher than that of Comparative Example 1. Similarly, comparing the specific activities at an electrode potential of -0.1 V from the result in FIG. 12, it was found that Example 1 was 6.6 times and Example 2 was 6.1 times as high as Comparative Example 1, and thus Example 1 and Example 2 had catalytic activities 6 times or higher than that of Comparative Example 1 also in the oxygen reduction.

As above, it was found that the electrode of this disclosure had high catalytic activity both in the oxygen generation and the oxygen reduction.

### (Tafel slope)

From the aforementioned linear sweep voltammogram, according to the rule, by organizing the common logarithm of the current density of the oxygen reduction or the oxygen generation on the horizontal axis and the potential on the vertical axis (hereinafter, such organized result is referred to as the Tafel plot), the slope at a part of the straight line in the Tafel plot, that is, the Tafel slope was obtained. The Tafel slope is an amount of change of the potential required to increase the current 10 times for various electrochemical reactions in addition to the reduction of oxygen and the generation of oxygen, which is normally represented using V/dec (dec is an abbreviation of decade that means 10 times) as a unit. Here, the Tafel slope is a positive value in the oxidation reaction and a negative value in the reduction reaction. In each case, the smaller absolute value means the higher catalytic activity. In the following, the magnitude of the Tafel slope is written in terms of the absolute value.

On the other hand, the reactions of the oxygen generation and the oxygen reduction are known as the reactions that have large Tafel slopes and are less likely to occur, among the electrochemical reactions. For example, even in the case of platinum that is known to have high catalytic activity, the absolute value of the Tafel slope is 60 mV/dec or more in each of the oxygen generation and the oxygen reduction. Very few catalysts exhibit smaller Tafel slopes than that of platinum. However, the Tafel slope in the oxygen catalyst of Example 1 was 44 mV/dec in the oxygen generation and -43 mV/dec in the oxygen reduction, and the Tafel slope in the oxygen catalyst of Example 2 was 39 mV/dec in the oxygen generation and -41 mV/dec in the oxygen reduction. The Tafel slopes in the oxygen catalysts of Example 1 and Example 2 were decreased by 25 % or more in both oxygen generation and oxygen reduction, with respect to the Tafel slopes of platinum, which exhibited that the oxygen catalysts of Example 1 and Example 2 had extremely high catalytic activities.

For the electrodes of Example 1 and Example 2, the aforementioned measurement of the current for the oxygen generation and the oxygen reduction was repeatedly performed about 10 times, but there was no change in measurement result. However, for the oxygen catalyst of Comparative Example 1, when the measurement was repeated 2 to 3 times, the current decreased, and the potassium hydroxide aqueous solution used in the measurement was colored, which suggested dissolution of the constituent elements from the oxygen catalyst of Comparative Example 1. The results of Comparative Example 1 illustrated in FIG. 11 and FIG. 12 are both initial measurement results.

### (Example 3)

As described below, an electrode of Example 3 was produced. For the electrode of Example 3, graphite as the conducting material and PTFE (polytetrafluoroethylene) as the water-repellent material were used (one example of step 2). First, a zirconia container (made by Fritsch, capacity of 45 mL) was charged with 66.5 g of zirconia ball with a diameter of 5 mm and 0.4 g of natural graphite (made by SEC CARBON), set in a ball mill (made by Fritsch, PL-7), and processed at a rate of 1000 rpm for 10 minutes. After this process, the ground graphite was cooled and then taken out. Thu thus processed graphite is ground graphite, and the graphite that is not ground is unground graphite.

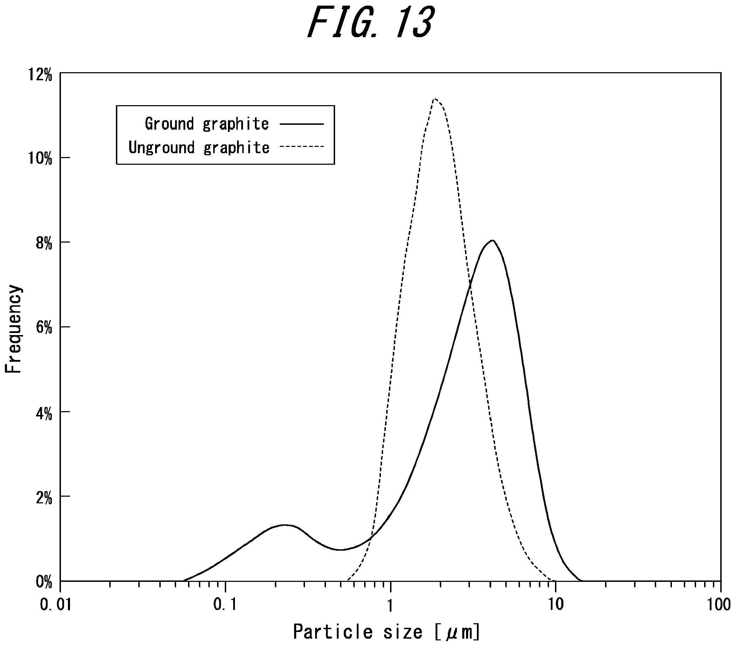

These ground graphite and unground graphite are measured with a laser diffraction/scattering particle size distribution analyzer (made by HORIBA, LA-960V2), and FIG. 13 presents the results. In FIG. 13, the horizontal axis represents the particle size, and the vertical axis represents the frequency. In the graph in FIG. 13, the solid line represents the particle size distribution of the ground graphite, and the dashed line represents the particle size distribution of the unground graphite. The 10 % particle size of the unground graphite is 1.10 µm, the 50 % particle size is 1.96 µm, and the 90 % particle size is 3.74 µm. The 10 % particle size of the ground graphite is 0.30 µm, the 50 % particle size is 3.00 µm, and the 90 % particle size is 6.32 µm.

The particle size of the unground graphite formed a particle size distribution curve having a single peak near about 2 µm. The particle size of the ground graphite formed a particle size distribution curve having two peaks at about 0.2 µm and about 4 µm. That is, the grinding process obtained submicron order ground graphite having a peak at about 0.2 µm.

For the electrode of Example 3, as such graphite having different particle sizes, two types of graphite: the above unground graphite and ground graphite were used. Furthermore, as a result of observing these unground graphite and ground graphite with a SEM (made by ZEISS, ULTRA55), the unground graphite was squamous, while the ground graphite was particulate and had an uneven surface aspect due to the break of the basal plane. The basal plane is flat and smooth and unlikely to support catalyst particles. However, it was found that the basal plane was broken to become uneven in the ground graphite, which caused the catalyst to be uniformly supported in more highly dispersed state to increase the catalyst area with small catalyst amount.

As such, the submicron order graphite particle in the ground graphite had an effect on the reduction in catalyst supported amount required per electrode unit area, for high dispersion and support of the catalyst, improvement in usage efficiency, and high catalytic activity. Graphite having different particle sizes was mixed to contain graphite particles with a large particle size, which contributed to the formation of a flow pass, which is suitable for supplying the inside of the electrode with oxygen and releasing oxygen generated inside the electrode to the atmosphere side, inside the electrode by the graphite particle with a large particle size.

Next, 0.0947 g of an oxygen catalyst synthesized by the method and conditions described in Example 1, the oxygen catalyst that passed a sieve with a mesh opening of 20 µm (the one with a secondary particle size of less than 20 µm), and 0.0474 g of the ground graphite were weighed and then put in an agate mortar to be mixed with an agate pestle for 10 minutes. 0.0947 g of the oxygen catalyst and 0.0925 g of the unground graphite (one example of graphite having a particle size different from that of the ground graphite) were added to the mixture to be further mixed for 10 minutes. 0.0823 g of a PTFE suspension (made by DAIKIN INDUSTRIES, D-210C, PTFE content of 60 weight%, PTFE mean particle size of 0.25 µm), 125 µL of a liquid paraffin (made by FUJIFILM Wako Pure Chemical, Wako 1st Grade reagent), and 125 µL of distilled water were added to this mixture in this order using a micropipette and kneaded until becoming clayey for 10 minutes, finally obtaining a kneaded product with a size of around 1 cm × 3 cm.

The produced kneaded product was sandwiched between two stainless plates (made by The Nilaco, SUS-304, thickness of 0.1 mm, 5 cm × 5 cm) and then pressed to be a thin plate with a heat roll press machine (made by YURI ROLL MACHINE, TSC-220) at a roll pressure of 1 MPa and a roll speed of 0.5 m/min, with a clearance between the rolls of 250 µm.

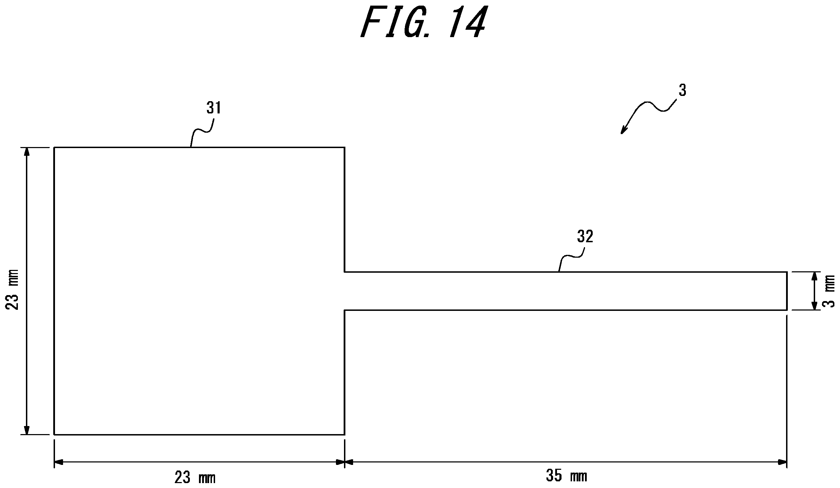

A gas diffusion layer (made by SGL, GDL-22-BB) and a nickel mesh (made by The Nilaco, wire diameter of 0.10 mm, 100 mesh), which will be the current collector 3 (refer to FIG. 14), were laminated in this order on the thus pressed kneaded product (one example of the catalytic layer). The nickel mesh, which had been preliminarily cut into a shape as in FIG. 13, was used. Of the kneaded product and the gas diffusion layer, parts protruding from the part of 23 mm × 23 mm (current collecting portion 31) of the nickel mesh were cut out with a cutter. The part of 3 mm × 35 mm (lead wire portion 32) in FIG. 13 is a lead part to be connected to a measurement device.

The laminated product was sandwiched between the above two stainless plates and then pressed at a roll pressure of 1 MPa, a roll speed of 0.5 m/min, and a roll temperature of 80 °C, with a clearance between the rolls of 275 µm. Thus, the kneaded product, the gas diffusion layer, and the nickel mesh ware integrated (one example of step 3) like the electrode 101 in the above-described first embodiment (refer to FIG. 1) and then taken out from the stainless plates. The laminated body of the kneaded product, the gas diffusion layer, and the nickel mesh, which had been integrated as described above, was immersed in a turpentine oil (made by KANTO CHEMICAL, Extra pure) for 1 hour and then immersed in ethanol (made by KANTO CHEMICAL) for 1 hour. Furthermore, the laminated body was taken out from the ethanol to be naturally dried.

The laminated body processed as described above was subjected to heat treatment at 370 °C in an electric furnace (made by DENKEN, KDF-S70) for 13 minutes in a nitrogen atmosphere. After this, the laminated body was held in the electric furnace to be naturally cooled to 110 °C and then taken out from the electric furnace to be further cooled.

The thickness of the obtained electrode was 0.20 µm, and the catalyst amount per unit area of the electrode was 5.23 mg/cm².

### (Example 4)

An electrode of Example 4 was produced in the same way as in Example 3, except that the oxygen catalyst of Example 1 was subjected to grinding process as described below and the mix ratio of the kneaded product was changed.

First, a zirconia container (made by Fritsch, capacity of 80 mL) was charged with 100 g of zirconia bead with a diameter of 1 mm, 5.0 g of an oxygen catalyst synthesized by the method described in Example 1, and 8.5 mL of distilled water, set in a ball mill device (made by Fritsch, PL-7), and processed at a rate of 800 rpm for 10 minutes. After this process and cooling, the solution containing the ground oxygen catalyst was separated from the zirconia bead, and the solution was then allowed to stand to remove the supernatant fluid. After this, the residue containing the oxygen catalyst was transferred to a glass dish. This glass dish was put into a vacuum drier (made by AS ONE, AVO-200SB) and subjected to vacuum drying at 80 °C for around 5 hours.

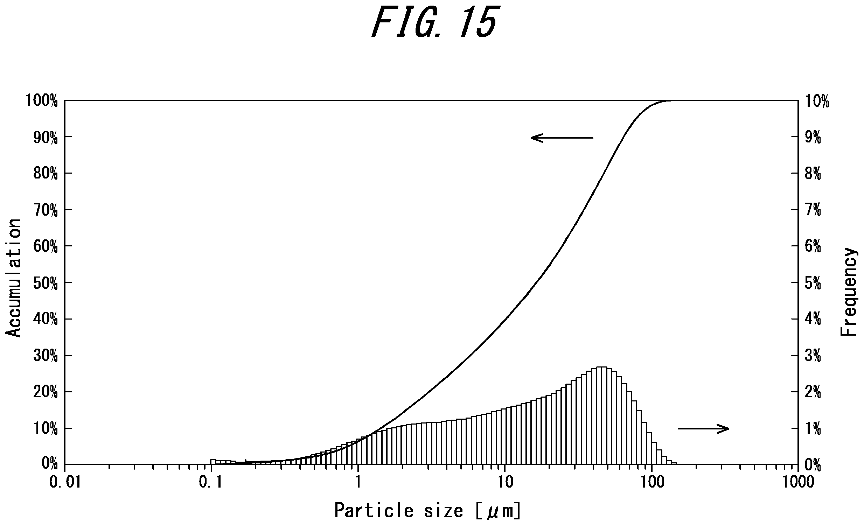

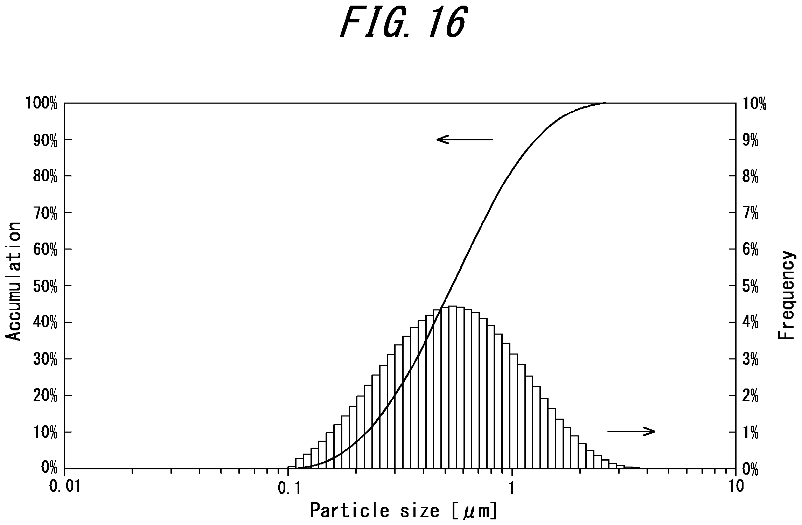

The particle size of the oxygen catalyst subjected to the grinding process as described above and the particle size of the oxygen catalyst before the grinding process were measured with a laser diffraction particle size distribution analyzer (made by Fritsch, ANALYSETTE 22). As the result, the oxygen catalyst before the grinding process had a secondary particle size of about 150 µm at a maximum and a volume mean diameter of 26 µm as in FIG. 15, while the oxygen catalyst subjected to the grinding process had a secondary particle size of 99.9 % particle of 3 µm at a maximum and a volume mean diameter of 0.67 µm as in FIG. 16. In FIG. 15 and FIG. 16, the horizontal axis represents the particle size, the left-hand vertical axis represents the accumulation, and the right-hand vertical axis represents the frequency.

The electrode of Example 4 was produced using this oxygen catalyst subjected to the grinding process. In this case, when the oxygen catalyst was first mixed with the ground graphite with an agate mortar, 0.0947 g of the oxygen catalyst that was not subjected to the grinding process and 0.0474 g of the ground graphite were used in Example 3, while 0.0947 g of the oxygen catalyst subjected to the grinding process and 0.0474 g of the ground graphite were used in Example 4. To each mixture, 0.0947 g of the oxygen catalyst that was not subjected to the grinding process and 0.0925 g of the unground graphite were added to be further mixed for 10 minutes in Example 3, while only 0.0925 g of the unground graphite was added without adding the oxygen catalyst to be mixed for 10 minutes in Example 4. The electrode of Example 4 was produced under the conditions same as those in Example 3 except for the above. The obtained electrode of Example 4 had a thickness of 0.18 mm and a catalyst amount per unit area of the electrode of 0.68 mg/cm². The catalyst amount per unit area reduced by 87 % with respect to the electrode of Example 3. The electrode of Example 4 has the same area as and is thinner than the electrode of Example 3. When the catalyst amounts in the entire electrodes were compared, Example 4 was 88 % less than Example 3.

### (Electrode evaluation)

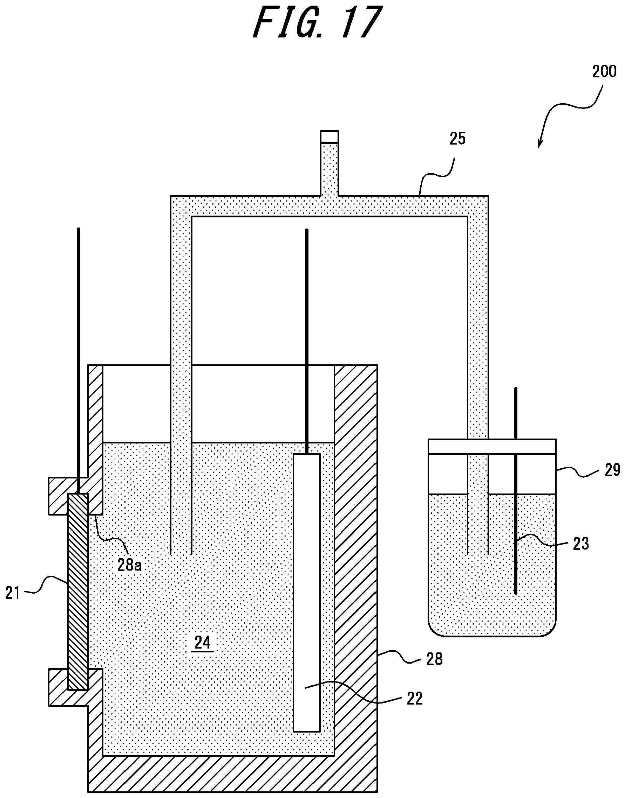

The electrode characteristics of the electrodes of Example 3 and Example 4 were evaluated using a three-electrode measuring cell 200 illustrated in FIG. 17 and an electrochemical measurement device.

The used three-electrode measuring cell 200 has a common configuration, but the following describes this configuration. A rectangular cylindrical first container 28 contain a liquid electrolyte 24 and a counter electrode 22, and the counter electrode 22 is immersed in the liquid electrolyte 24. An electrode 21 to be evaluated is arranged to cover a through hole 28a at the side wall portion of the first container 28, one side of the electrode 21 is in contact with the electrolyte 24, while the other side is in contact with the atmosphere. The electrode 21 is a working electrode in the measurement. There is a second container 29 different from the first container 28, and the second container 29 contains a reference electrode 23 and the liquid electrolyte 24. The reference electrode 23 is immersed in the electrolyte 24. The electrolyte 24 in the first container 28 is connected to the electrolyte 24 in the second container 29 through a liquid junction 25. The liquid junction 25 is a tube formed into a shape as illustrated in FIG. 17, and this tube is filled with the electrolyte 24. One end of the liquid junction 25 is inserted into the electrolyte 24 in the first container 28, while the other end is inserted into the electrolyte 24 in the second container 29. The electrode 21 was sealed to prevent the electrolyte 24 from leaking from the contact surface of the first container 28.

The electrode of Example 3 or Example 4 was arranged as the electrode 21 in FIG. 17 to cause the nickel mesh side to be on the atmosphere side and the opposite side to be in contact with 6 mol/L of a KOH aqueous solution (electrolyte 24). At this time, the opening on the atmosphere open side of the electrode of this disclosure was 20 mm × 20 mm, and the electrode area based on this was 4 cm². When the current density, which is described later, is determined using this value, the current density was obtained by dividing the current by the electrode area of 4 cm². A platinum plate (5 cm × 5 cm × 0.1 mm) as the counter electrode 22 was immersed in this KOH aqueous solution. Furthermore, a mercury/mercury oxide electrode with 6 mol/L of the KOH aqueous solution was used as the reference electrode 23, and this reference electrode 23 was connected to the KOH solution in contact with the electrode of this disclosure through the liquid junction 25 filled with 6 mol/L of the KOH aqueous solution. The potential of the electrode of this disclosure and the current flowing through this electrode were measured at room temperature by cyclic voltammetry, which measures the current while changing the potential of the electrode of this disclosure with respect to the reference electrode 23 at a rate of 50 mV/s. During the measurement, 400 mL/min of oxygen was blown from the atmosphere side of the electrode of this disclosure.

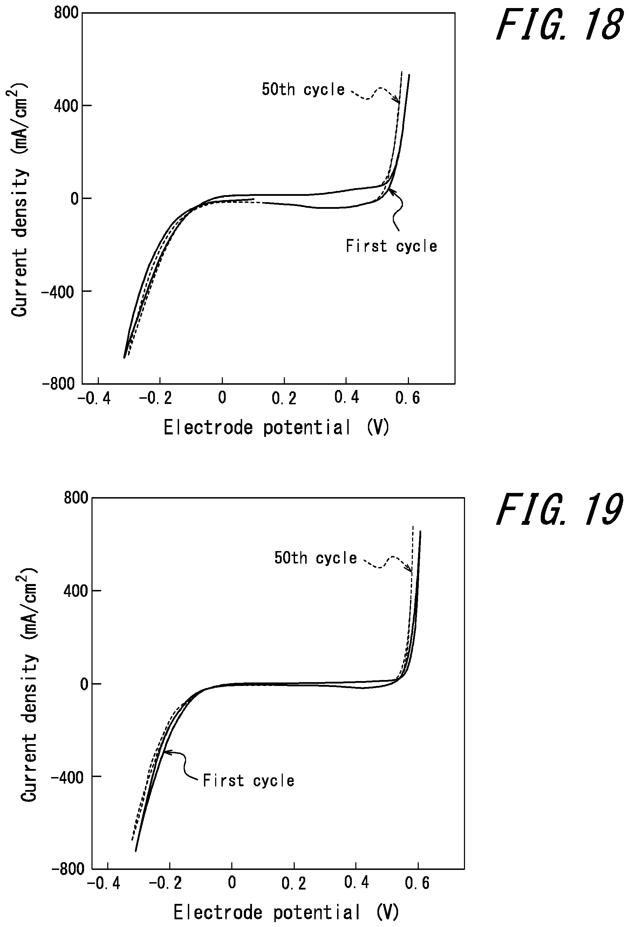

FIG. 18 and FIG. 19 illustrate respective relationship diagrams between the potentials and the currents obtained in the electrodes of Example 3 and Example 4. In FIG. 18 and FIG. 19, the horizontal axis represents the electrode potential (hereinafter, may be simply referred to as the potential), and the vertical axis represents the current density obtained by dividing the measured current by the electrode area (4 cm²). In FIG. 18 and FIG. 19, the solid line represents the first cycle, and the dashed line represents the 50th cycle. In FIG. 18 and FIG. 19, the measurements were performed in the identical potential range, and the potentials obtained by correcting the ohmic losses according to the results were used. The ohmic loss occurs due to a solution resistance Rs in the liquid junction that connects the electrode of this disclosure to the reference electrode. When the current flowing through the electrode of this disclosure is I, the potential equivalent to I × Rs occurs in the electrode of this disclosure. The potential equivalent to I × Rs is inevitable in the measurement at the three-electrode measuring cell and varies depending on the length of the liquid junction or the concentration of the KOH solution, and is thus not caused by the electrode of this disclosure itself. Thus, in electrochemical measurement as described above, the catalytic activity of the electrode is usually evaluated from the relationship between the potential obtained by correcting the ohmic loss, and the current or the current density. This is inevitable when the flowing current is large and cannot be ignored such that the value of I × Rs (unit: volt) is 100 mV or more, and the measurement results of the electrodes of Example 3 and Example 4 also corresponded to this. Thus, the relationship between the potential after correcting the ohmic loss and the current density was illustrated as in FIG. 18 and FIG. 19.

The results in FIG. 18 and FIG. 19 each demonstrate that the oxygen generation current (positive current in the drawing) and the oxygen reduction current (negative current in the drawing) of the electrode of this disclosure do not change between the first cycle and the 50th cycle. The maximum current density illustrated in the drawing is ±600 mA/cm² or more, and the potential difference required from the potential at which the current starts to flow to such a high current density is very small, around 100 mV for the oxygen generation (between 500 mV and 600 mV at electrode potential) and around 200 mV even for the oxygen reduction (between -100 mV and -300 mV at electrode potential). That is, both of the electrodes of this disclosure described in Example 3 and Example 4 have high catalytic activity and stability thereof.

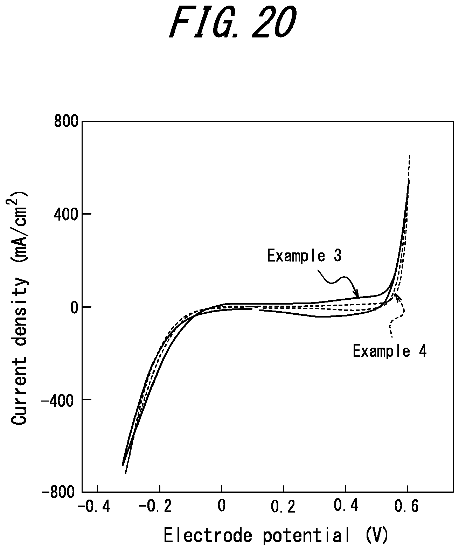

Next, FIG. 20 illustrates the results of the first cycles in the electrodes of Example 3 and Example 4 in comparison. In FIG. 20, the solid line represents the result of Example 3, and the dashed line represents the result of Example 4. In FIG. 20, similarly to in FIG. 18 and FIG. 19, the horizontal axis represents the electrode potential, and the vertical axis represents the current density. This demonstrates that there was little difference in the relationship between the oxygen generation current and the oxygen reduction current, and the potential. On the other hand, as described above, the catalyst amount of the electrode of Example 4 is 87 to 88 % less than that of Example 3. In other words, on a per unit mass basis, the catalytic activity of the oxygen catalyst subjected to the grinding process is 8 or more times higher than that of the oxygen catalyst that is not subjected to the grinding process. This is due to the grinding process, which reduced the particle size of the oxygen catalyst to increase the surface area per unit mass.

As described above, it was found that the catalytic activity of the electrode can be significantly improved using the oxygen catalyst with a secondary particle size of 3 µm or less as in Example 4.

### (Example 5)

An electrode of Example 5 was produced in the same way as in Example 4, except that the following step was performed in the step of producing the electrode of Example 4. In Example 4, similarly to in Example 3, the laminated body was subjected to heat treatment at 370 °C in an electric furnace (made by DENKEN, KDF-S70) for 13 minutes in a nitrogen atmosphere, and then held in the electric furnace to be naturally cooled to 110 °C and then taken out from the electric furnace to be further cooled. In the electrode of Example 5, before this heat treatment in the electric furnace, a PTFE suspension (made by DAIKIN INDUSTRIES, D-210C, PTFE content of 60 weight%) was sprayed and applied to the current collector side of the laminated body using an airbrush (made by ANEST IWATA, HP-CS), and then the above heat treatment in the electric furnace and cooling were performed (one example of step 4). Thus, 0.065 g (0.012 g/cm² per electrode area) of a PTFE particle layer (one example of the water-repellent layer) was supported on the surface on the current collector side of the electrode of Example 5. That is, the electrode of Example 5 has the structure of the electrode 102 described in the above second embodiment. The thus obtained electrode of Example 5 was subjected to the test with 50 cycles by cyclic voltammetry in the same way as in Example 4. As the result, the electrode of Example 5 did not indicate any liquid leakage on the current collector side of the electrode even after the test.

### (Example 6)

An electrode of Example 6 was produced in the same way as in Example 4, except that the following step was performed in the step of producing the electrode of Example 4. In Example 4, similarly to in Example 3, the laminated body was subjected to heat treatment at 370 °C in an electric furnace (made by DENKEN, KDF-S70) for 13 minutes in a nitrogen atmosphere, and then held in the electric furnace to be naturally cooled to 110 °C and then taken out from the electric furnace to be further cooled. In the electrode of Example 6, after this heat treatment in the electric furnace, a PTFE suspension (made by DAIKIN INDUSTRIES, D-210C, PTFE content of 60 weight%) was sprayed and applied to the current collector side of the laminated body using an airbrush (made by ANEST IWATA, HP-CS), and then the above heat treatment in the electric furnace and cooling were performed (one example of step 4). Thus, 0.0395 g (0.0075 g/cm² per electrode area) of a PTFE particle layer (one example of the water-repellent layer) was supported on the surface on the current collector side of the electrode of Example 6.

Charge and discharge cycle test was conducted on the thus obtained electrode of Example 6 by the following method. In the charge and discharge cycle test, the three-electrode measuring cell in FIG. 17 same as in Example 3 and Example 4 was used, and the identical counter electrode, electrolyte, and reference electrode were used. The charge and the discharge were both performed with a current density of 100 mA/cm² and a current applying time of 60 seconds, and the current application was paused for 10 seconds between the charge and the discharge or between the discharge and the charge. This was considered one cycle, and the potential in the electrode of Example 6 was recorded with respect to that in the reference electrode while continuously performing the charge and discharge cycle. In this charge and discharge cycle test, the electrode was energized with a current density of 100 mA/cm² under an atmosphere open condition without any forced supply of oxygen, the reactant, to the electrode by blowing air and oxygen to the electrode, etc. This was a very strict condition under which the electrode is likely to deteriorate, as the condition of the charge and discharge cycle test. Repeating the current application for 60 seconds with a pause for 10 second is also likely to accelerate the deterioration of the electrode. Thus, the experiment for durability was performed under extremely strict conditions.

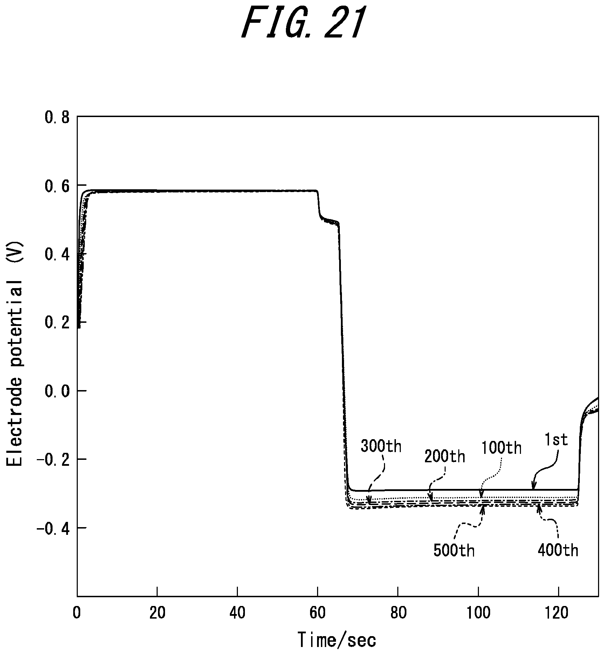

FIG. 21 illustrates the results of a comparison of the potential curves during the charge and discharge in respective cycles obtained in the above charge and discharge cycle test, by extracting the potential curves in representative cycles. As illustrated in FIG. 21, the charge potential (about 0.6 V) and the discharge potential (about -0.3 V) hardly changed during 500 cycles of charge and discharge.

During the charge and discharge cycle test up to the end of 500 cycles, no leakage of the KOH aqueous solution was observed from the atmosphere open side of the electrode, that is, the PTFE particle layer.

The above results demonstrated that the electrode of Example 6 can maintain high catalytic activity and has high durability under extremely strict charge and discharge test conditions, by including the PTFE particle layer as the water-repellent layer, on the atmosphere side of the gas diffusion layer, which is integrated with the current collector.

### (Example 7)

An oxygen catalyst was subjected to the grinding process and observed with a SEM under the conditions same as those in Example 4, except for changing the grinding process time in Example 4 to 5 minutes. This oxygen catalyst subjected to the grinding process was supported on a titanium disk under the conditions same as those in Example 1 and Example 2 to produce an electrode of Example 7. Then, for the electrode of Example 7, the oxygen reduction current and the oxygen generation current were measured by the method same as that of Example 1 and Example 2. Furthermore, a value (specific activity) was obtained by dividing each current value by the catalyst weight. The supported amount of the oxygen catalyst in Example 7 was in the range same as that of Example 1 and Example 2.

As the result of SEM observation of the oxygen catalyst that was subjected to the grinding process for 5 minutes, although particles of 70 nm or less, which are similar to those in Example 1 and Example 2 illustrated in FIG. 9, were observed, particles with a primary particle size of more than 100 nm, which were not observed in Example 1 and Example 2, were also observed, and particles with a primary particle size reaching 200 nm also existed. That is, it was found that the grinding process increased the maximum of the primary particle size to more than 100 nm in Example 7.

Next, the specific activities of the oxygen generation and the oxygen reduction in the electrode of Example 2 and the electrode of Example 7 were compared. The specific activities of the oxygen generation at 0.56 V were 23 A/g in Example 2 and 23 A/g in Example 7, which were identical. However, the specific activities of the oxygen reduction at -0.1 V were -4.5 A/g in Example 2 and -1.4 A/g in Example 7. That is, the difference in the primary particle sizes of the oxygen catalysts used in the production of the electrodes had no effect on the specific activities of the oxygen generation. In contrast, the specific activity of the oxygen reduction in Example 7 is 31 % less than that in Example 2, and an increase in the primary particle size reduced the specific activity for the oxygen reduction. Such results are thought to be due to the fact that the reaction sites of the oxygen generation and the oxygen reduction are different, a two-phase interface in Example 7 and a three-phase interface in Example 2, and the reaction site of the oxygen reduction is more susceptible to the effect the primary particle size. The above results demonstrate that the preferable primary particle size of the oxygen catalyst is 100 nm or less.

### INDUSTRIAL APPLICABILITY

The electrode of this disclosure can be used as the electrode for the oxygen generation, the oxygen reduction, or both reactions, in a battery, an electrolytic device, and a sensor that use the oxygen reduction, the oxygen generation, or both reactions using an alkaline aqueous solution as an electrolyte, in addition to the air electrodes of the air primary battery and the air secondary battery, the oxygen cathode of the brine electrolysis (device), the cathode of the alkaline fuel cell (device), and the anode of the alkaline water electrolysis. The electrode of this disclosure can be also used for an electrode for the oxygen generation, the oxygen reduction, or both reactions at a temperature less than 100 °C, in the oxygen reactions using an electrolyte other than the alkaline aqueous solution. The electrode of this disclosure can be used as, for example, the cathode of a solid polymer fuel cell. The electrochemical device of this disclosure can be used for power generation and/or power storage in various kinds of devices and various products that use electricity, such as mobile devices, electronic devices, electronic products, bicycles, automobiles, trains, ships, aircrafts, and drones; hydrogen production; oxygen production; chlorine production; and caustic soda production.

### REFERENCE SIGNS LIST

- 10: disk (titanium disk, titanium)
- 11: one surface (surface)
- 100: electrode
- 101: electrode
- 102: electrode
- 103: electrode
- 104: electrode
- C: oxide layer (oxygen catalyst, oxide)
- 21: electrode
- 22: counter electrode
- 23: reference electrode
- 24: electrolyte
- 25: liquid junction
- 28: first container
- 29: second container
- 200: measuring cell
- 3: current collector
- 31: current collecting portion
- 32: lead wire portion
- 4: catalytic layer
- 5: gas diffusion layer
- 6: water-repellent layer

## Claims

1. An electrode used for oxygen reactions, the electrode comprising, as an oxygen catalyst, an oxide that has peaks at positions of 2θ = 30.07°±1.00°, 34.88°±1.00°, 50.20°±1.00°, and 59.65°±1.00° in an X-ray diffraction measurement using a CuKα ray and has constituent elements of bismuth, ruthenium, sodium, and oxygen.

2. The electrode according to claim 1, wherein an atomic ratio O/Bi of the oxygen to the bismuth and an atomic ratio O/Ru of the oxygen to the ruthenium are both more than 3.5.

3. The electrode according to claim 1 or 2, wherein the oxygen reactions occur in an alkaline aqueous solution as an electrolyte.

4. The electrode according to any one of claims 1 to 3, wherein the oxygen catalyst has a primary particle size of 100 nm or less.

5. The electrode according to any one of claims 1 to 4, wherein the oxygen catalyst has a secondary particle size of 3 µm or less.

6. The electrode according to any one of claims 1 to 5, comprising a gas diffusion layer.

7. The electrode according to any one of claims 1 to 6, comprising a catalytic layer that includes the oxygen catalyst, a conducting material, and a water-repellent material as constitutional materials.

8. The electrode according to claim 7, wherein graphite having different particle sizes is used as the conducting material.

9. The electrode according to claim 7 or 8, being formed into a thin plate shape and having a thickness of 250 µm or less.

10. The electrode according to any one of claims 7 to 9, comprising a water-repellent layer, through which oxygen can permeate, on an atmosphere side of the catalytic layer or a gas diffusion layer.

11. The electrode according to claim 10, wherein the water-repellent layer is made of water-repellent material particles.

12. The electrode according to any one of claims 1 to 11, being the air electrode of an air battery, the oxygen cathode of brine electrolysis, the cathode of an alkaline fuel cell, or the anode of alkaline water electrolysis.

13. The electrode according to any one of claims 1 to 12, comprising a non-electronically conductive reaction space divider arranged on an electrolyte side, the reaction space divider including a plurality of electrolyte holder portions consisting of a concave space configured to hold a liquid electrolyte.

14. A method of producing an electrode used for oxygen reactions, the method comprising a step 1 of synthesizing an oxygen catalyst being an oxide that has peaks at positions of 2θ = 30.07°±1.00°, 34.88°±1.00°, 50.20°±1.00°, and 59.65°±1.00° in an X-ray diffraction measurement using a CuKα ray and has constituent elements of bismuth, ruthenium, sodium, and oxygen; and a step 2 of producing a catalytic layer that includes the oxygen catalyst, a conducting material, and a water-repellent material.

15. The method of producing an electrode according to claim 14, wherein an atomic ratio O/Bi of the oxygen to the bismuth and an atomic ratio O/Ru of the oxygen to the ruthenium are both more than 3.5.

16. The method of producing an electrode according to claim 14 or 15, wherein the oxygen catalyst has a secondary particle size of 3 µm or less, in the step 1.

17. The method of producing an electrode according to any one of claims 14 to 16, wherein graphite having different particle sizes is used as the conducting material, in the step 2.

18. The method of producing an electrode according to any one of claims 14 to 17, comprising a step 3 of forming a gas diffusion layer on the catalytic layer or integrating the catalytic layer with a gas diffusion layer.

19. The method of producing an electrode according to any one of claims 14 to 18, comprising a step 4 of including a current collector integrated with the catalytic layer or a gas diffusion layer, applying a suspension containing a water-repellent material on a surface opposite to a side in contact with an electrolyte, and subsequently applying heat treatment.

20. An electrochemical device using the electrode according to any one of claims 1 to 13.

21. The electrochemical device according to claim 20, being an air battery, a brine electrolyzer, an alkaline water electrolyzer, an alkaline fuel cell, or a water electrolysis and fuel cell device that uses an alkaline aqueous solution as an electrolyte.

22. The electrochemical device according to claim 21, wherein the air battery has a negative electrode active material, which is hydrogen, lithium, sodium, potassium, magnesium, calcium, or zinc.
